# EUROPEAN PATENT SPECIFICATION

(11) **EP 2 811 563 B1**
(45) Date of publication and mention of the grant of the patent: **18.09.2019**
(21) Application number: 13744068.1
(22) Date of filing: 17.01.2013
(51) Int. Cl.: H01M 4/90, H01M 8/1007, H01M 4/92, B01J 31/28, H01M 8/0239, H01M 4/88, H01M 4/86

(54) **CATALYST LAYER CONSTITUTING BODY AND METHOD FOR PREPARING CATALYST LAYER CONSTITUTING BODY**
KATALYSATORSCHICHTBILDENDER KÖRPER UND VERFAHREN ZUR HERSTELLUNG DES KATALYSATORSCHICHTBILDENDEN KÖRPERS
CORPS CONSTITUTIF DE COUCHE DE CATALYSEUR ET PROCÉDÉ DE PRÉPARATION D'UN CORPS CONSTITUTIF DE COUCHE DE CATALYSEUR

(30) Priority: 02.02.2012 JP 2012021358; 29.10.2012 JP 2012237468
(43) Date of publication of application: 10.12.2014
(73) Proprietor: Kyushu University, National University Corporation, Fukuoka-shi, Fukuoka 812-8581 (JP)
(72) Inventor: NAKASHIMA, Naotoshi, Fukuoka-shi Fukuoka 812-8581 (JP); FUJIGAYA, Tsuyohiko, Fukuoka-shi Fukuoka 812-8581 (JP)
(74) Representative: Osha Liang
(86) International application number: PCT/JP2013/050748
(87) International publication number: WO 2013/114957

(56) References cited:
- EP-A2- 2 365 569
- WO-A1-2004/017446
- JP-A- 2000 208 151
- JP-A- 2002 246 041
- JP-A- 2003 282 067
- JP-A- 2011 077 006
- US-A1- 2005 112 448
- US-A1- 2006 019 146
- US-A1- 2006 099 485

## Description

### Technical Field

The present invention relates to a catalyst layer constituting body of a fuel cell and a method of preparing the catalyst layer constituting body.

### Background Art

Recently, there has been interest in a fuel cell which enables the extraction of electric power by an electrochemical reaction.

The fuel cell is a cell which extracts electric power by generating potential difference between an electrode which is arranged on a supply side of a negative electrode active material (hereinafter also referred to as hydrogen electrode) and an electrode which is arranged on a supply side of a positive electrode active material (hereinafter also referred to as oxygen electrode) by supplying a negative electrode active material such as hydrogen, for example, and a positive electrode active material such as oxygen in air, for example, and by causing a reaction between the negative electrode active material and the positive electrode active material. The fuel cell is characterized in that the extraction of electric power can be permanently performed with no limitation imposed on electric capacitance by continuously replenishing such active materials. Further, it is often the case where a byproduct produced along with the generation of electric power is mainly water and hence, fuel cell has been attracting much attention from a viewpoint of economy as well as from a viewpoint of an environmental load.

A solid polymer fuel cell which is classified as one of such fuel cells is, in general, constituted such that a catalyst layer is formed on both surfaces of a solid polymer film made of proton conductive polymer such as Nafion (registered trademark), the solid-molecular film on which the catalyst layers are formed has both sides thereof sandwiched by electrodes such as carbon papers thus forming a cell, and a fuel cell is formed of a single unit of such a cell or is formed by connecting (stacking) a plurality of such cells in series or parallel to each other.

In such respective constitutions of the fuel cell, the catalyst layer is a portion where electrons and protons are generated from a negative electrode active material, electrons and protons are made to react with a positive electrode active material and hence, the catalyst layer plays an important role in the system of generation of electric power in the fuel cell.

As one example of the constitution of the catalyst layer, there has been known the structure where, for example, so-called platinum carbon black which is activated carbon black on which platinum fine particles are carried is used as a catalyst layer constituting body, and the catalyst layer is bonded to both surfaces of an electrode or a solid polymer film together with Nafion having proton conductivity (registered trademark: hereinafter, simply referred to as "Nafion") (see patent literature 1, for example).

According to the constitution of the catalyst layer described above, it is possible to provide a fuel cell which can generate electric power by causing the above-mentioned reaction by making platinum carried on a surface of a carbon black function as a catalyst.

Patent literature 2 describes an adhesive layer disposed between a carbon particle and a catalyst substance of a catalyst-supporting particle for a fuel cell containing the carbon particle and the catalyst substance. A catalyst electrode for a fuel cell and the fuel cell using the above particle are also described.

Patent literature 3 describes an adhesion layer containing a second solid polymer electrolyte and disposed between a solid polymer electrolyte membrane and a fuel electrode and/or an oxidant electrode containing a first solid polymer electrolyte and a catalyst substance. The solid polymer electrolyte membrane and the adhesion layer are made of the same solid polymer electrolyte.

### Prior Art Literature

### Patent Literature

Patent Literature 1: JP-A-09-092293
Patent Literature 2: US 2006/019146 A1
Patent Literature 3: US 2005/112448 A1

### Summary of the Invention

### Technical Problem

However, the above-mentioned conventional fuel cell where platinum carbon black is used for forming the catalyst layer constituting body has a drawback that a proton conductive polymer such as Nafion is liable to run off due to moisture produced by generation of electric power in the catalyst layer on an oxygen electrode side, for example.

That is, protons generated on the hydrogen electrode reach an oxygen electrode side through a polymer electrolytic film, and protons react with molecular oxygen and electrons on a surface of platinum through a proton conductive polymer of the catalyst layer on an oxygen electrode side. Here, due to an acidic functional group of the proton conductive polymer necessary for proton conduction, the proton conductive polymer per se has high wettability. Accordingly, there exists a drawback that the proton conductive polymer of the catalyst layer on an oxygen electrode side will run off due to water generated by the reaction along with an operation of the fuel cell so that the catalyst layer is deteriorated thus lowering an electromotive force.

The present invention has been made in view of such circumstances, and it is an object of the present invention to provide a catalyst layer constituting body which can prevent runoff of a proton conductive polymer from a catalyst layer even when moisture is generated by an operation of a fuel cell.

It is another object of the present invention to provide a method of preparing such a catalyst layer constituting body.

It is still another object of the present invention to provide an electrode having a catalyst provided with a catalyst layer constituted of such a catalyst layer constituting body, a solid polymer film provided with a catalyst provided with a catalyst layer constituted of such a catalyst layer constituting body, a cell which includes such an electrode having a catalyst or a solid polymer film provided with a catalyst, and a fuel cell having such a cell.

### Means for Solving a Problem

To overcome the above-mentioned drawbacks of the prior art, the present invention according to claim 1 is directed to a catalyst layer constituting body of a fuel cell where catalyst particles are carried on carbon, wherein the catalyst particles are carried on the carbon by way of a carrying layer constituted of an upper layer and a lower layer, the upper layer of the carrying layer is formed by using a polymer having proton conductivity, the upper layer forming a proton conduction layer which conducts protons generated in the catalyst particles or protons to be supplied to the catalyst particles therethrough, the lower layer of the carrying layer is formed by using a polymer having affinity with both the proton conduction layer and the carbon, the lower layer forming an adhesive layer which binds the proton conduction layer and the carbon to each other, the adhesive layer is formed on a surface of the carbon, and the proton conduction layer is formed on a surface of the adhesive layer.

Further, the adhesive layer is formed by using a polymer which contains benzene rings and a structure which exhibits basicity in a molecular structure thereof.

The embodiment according to claim 2 is the catalyst layer constituting body described in claim 1, wherein the catalyst particles are carried between the upper layer and the lower layer of the carrying layer.

The embodiment according to claim 3 is the catalyst layer constituting body described in claim 2, wherein the polymer used to form the adhesive layer comprises atoms having unpaired electrons and contained in a molecular structure thereof.

The embodiment according to claim 4 is the catalyst layer constituting body described in any one of claims 1 to 3, wherein the proton conduction layer is formed by using a polymer having acidic side chains.

The embodiment according to claim 5 is the catalyst layer constituting body described in claim 1, wherein the proton conduction layer is formed by using a polymer having acidic side chains, and the catalyst particles are carried on a surface of the proton conduction layer.

The embodiment according to claim 6 is the catalyst layer constituting body described in any one of claims 1 to 5, wherein the carbon is one selected from a group consisting of carbon black, graphene and carbon nanotube or a mixture of two or more said components.

The embodiment according to claim 7 is the catalyst layer constituting body described in any one of claims 1 to 6, wherein the polymer used to form the adhesive layer comprises polybenzimidazole as a main component.

The embodiment according to claim 8 is the catalyst layer constituting body described in any one of claims 1 to 7, wherein the proton conduction layer is formed by using a polyvinylphosphonic acid as a main component.

The present invention according to claim 9 is directed to an electrode provided with a catalyst being characterized in that a catalyst layer is formed by stacking the catalyst layer constituting body described in any one of claims 1 to 8 on a surface of an electrode sheet.

The present invention according to claim 10 is directed to a cell being characterized in that the electrode provided with a catalyst described in claim 9 is provided at least as an oxygen-electrode-side electrode.

The present invention according to claim 11 is directed to a solid polymer film provided with a catalyst being characterized in that the catalyst layer is formed by stacking the catalyst layer constituting body described in any one of claims to 1 to 8 at least on a surface of the solid polymer film on an oxygen electrode side.

The present invention according to claim 12 is directed to a cell being characterized in that the cell includes the solid polymer film provided with a catalyst described in claim 11.

The present invention according to claim 13 is directed to a fuel cell provided with the cell according to claim 10 or claim 12.

The present invention according to claim 14 is directed to a method of preparing a catalyst layer constituting body of a fuel cell where catalyst particles are carried on carbon, the method comprising the steps of: obtaining adhesive-layer-forming polymer deposited carbon where a adhesive-layer-forming polymer is deposited on a surface of the carbon with a large film thickness by preparing a first dispersion medium by dissolving the adhesive-layer-forming polymer in a first solvent which exhibits solubility to the adhesive-layer-forming polymer, the adhesive-layer-forming polymer including benzene rings and a structure which exhibits basicity in a molecular structure thereof, by dispersing the carbon into the first dispersion medium and, thereafter, by collecting a filtered residue after filtering the first dispersion medium; generating adhesive layer formed carbon where a thin-film-like adhesive layer is formed on a surface of the carbon by removing an extra adhesive-layer-forming polymer deposited on the surface of the carbon by cleaning the adhesive-layer-forming polymer deposited carbon using the first solvent; generating catalyst-deposited carbon where catalyst particles are deposited on a surface of the adhesive layer by adding catalyst particles or a catalyst raw-material component to a dispersing liquid prepared by dispersing the adhesive layer formed carbon into a second dispersion medium; obtaining a proton conduction layer-forming polymer deposited carbon where a proton conduction layer-forming polymer is deposited on a surface of the catalyst-deposited carbon with a large film thickness by preparing a third dispersion medium by dissolving the proton conduction layer-forming polymer having acidic side chains into a second solvent which exhibits solubility to the proton conduction layer-forming polymer, by dispersing the catalyst-deposited carbon into the third dispersion medium and, thereafter, by collecting a filtered residue after filtering the third dispersion medium; and obtaining a catalyst layer constituting body where a thin-film-like proton conduction layer is formed on a surface of the catalyst-deposited carbon by removing an extra proton conduction layer-forming polymer deposited on the surface of the catalyst-deposited carbon by cleaning the proton conduction layer-forming polymer deposited carbon using the second solvent.

The present invention according to claim 15 is directed to a method of preparing a catalyst layer constituting body of a fuel cell where the adhesive-layer-forming polymer includes atoms having unpaired electrons in a molecular structure thereof.

The present invention according to claim 16 is directed to a method of preparing a catalyst layer constituting body of a fuel cell where catalyst particles are carried on carbon, the method comprising the steps of: obtaining a adhesive-layer-forming polymer deposited carbon where a adhesive-layer-forming polymer is deposited on a surface of the carbon with a large film thickness by preparing a first dispersion medium by dissolving the adhesive-layer-forming polymer which includes benzene rings and a structure which exhibits basicity in a molecular structure in a first solvent which exhibits solubility to the adhesive-layer-forming polymer, by dispersing the carbon into the first dispersion medium and, thereafter, by collecting a filtered residue after filtering the first dispersion medium; generating adhesive layer formed carbon where a thin-film-like adhesive layer is formed on a surface of the carbon by removing an extra adhesive-layer-forming polymer deposited on the surface of the carbon by cleaning the adhesive-layer-forming polymer deposited carbon using the first solvent; obtaining a proton conduction layer-forming polymer deposited carbon where a proton conduction layer-forming polymer is deposited on a surface of the adhesive layer formed carbon with a large film thickness by preparing a second dispersion medium by dissolving the proton conduction layer-forming polymer having acidic side chains into a second solvent which exhibits solubility to the proton conduction layer-forming polymer, by dispersing the adhesive layer formed carbon into the second dispersion medium and, thereafter, by collecting a filtered residue after filtering the second dispersion medium; obtaining proton conduction layer formed carbon where a thin-film-like proton conduction layer is formed on a surface of the adhesive layer formed carbon by removing an extra proton conduction layer-forming polymer deposited on a surface of the adhesive layer formed carbon by cleaning the proton conduction layer-forming polymer deposited carbon by the second solvent; and forming a catalyst layer constituting body where catalyst particles are deposited on a surface of the proton conduction layer formed carbon by adding catalyst particles or a catalyst raw-material component to a dispersing liquid prepared by dispersing the proton conduction layer formed carbon in the third dispersion medium.

### Advantage of the Invention

According to the present invention, it is possible to provide a catalyst layer constituting body which can prevent a runoff of a proton conduction polymer from the catalyst layer even when the moisture is generated due to an operation of the fuel cell. The present invention also provides the method of preparing a catalyst layer constituting body having the above-mentioned advantageous effects. The present invention further provides an electrode provided with a catalyst which includes a catalyst layer constituted of a catalyst layer constituting body having the above-mentioned advantageous effect, a solid polymer film provided with a catalyst which includes a catalyst layer constituted of a catalyst layer constituting body having the above-mentioned advantageous effect, a cell having such an electrode provided with a catalyst or a solid polymer film provided with such a catalyst, and a fuel cell provided with such a cell.

### Brief Explanation of Drawings

Fig.1 is an explanatory view showing the overall constitution of a fuel cell.
Fig. 2 is an explanatory view showing an example of the structure of a catalyst layer constituting body according to this embodiment.
Fig. 3 is an explanatory view schematically showing a method of preparing a catalyst layer constituting body according to this embodiment.
Fig. 4 is a microscopic examination image of MWNT/PBI/Pt.
Fig. 5 is a microscopic examination image of MWNT/PBI/Pt.
Fig. 6 is a microscopic examination image of MWNT/PBI/Pt and MWNT/PBI/Pt/PVPA.
Fig. 7 is a microscopic examination image of MWNT/PBI/Pt.
Fig. 8 is an explanatory view showing a part of method of preparing a catalyst layer constituting body according to this embodiment.
Fig. 9 is a microscopic examination image of MWNT/PBI/Pt/PVPA.
Fig. 10 is a view showing a spectrum obtained by X-ray photoelectronic spectrometry of MWNT/PBI/Pt/PVPA.
Fig. 11 is an explanatory view showing a comparison result of ECSA.
Fig. 12 is an explanatory view showing a result of proton conduction layer runoff test.
Fig. 13 is an explanatory view showing steps of preparing an electrode provided with a catalyst and a cell according to this embodiment.
Fig. 14 is an explanatory view showing a result of a characteristic test of a cell according to this embodiment.
Fig. 15 is an explanatory view showing the summary of a comparison test of the cell according to this embodiment.
Fig.16 is an explanatory view showing the result of a comparison test of the cell according to this embodiment.
Fig.17 is an explanatory view showing the result of a comparison test of the cell according to this embodiment.
Fig.18 is an explanatory view showing the result of a comparison test of the cell according to this embodiment. Description of Embodiments

The present invention provides a catalyst layer constituting body of a fuel cell where catalyst particles are carried on carbon, wherein the catalyst particles are carried on the carbon by way of a carrying layer constituted of an upper layer and a lower layer, the upper layer of the carrying layer is formed by using a polymer having proton conductivity, the upper layer forming a proton conduction layer which conducts protons generated in the catalyst particles or protons to be supplied to the catalyst particles therethrough, and the lower layer of the carrying layer is formed by using a polymer having affinity with both the proton conduction layer and the carbon, the lower layer forming an adhesive layer which binds the proton conduction layer and the carbon to each other, the adhesive layer is formed on a surface of the carbon, the proton conduction layer is formed on a surface of the adhesive layer, and the adhesive layer is formed by using a polymer which contains benzene rings and a structure which exhibits basicity in a molecular structure thereof.

In this specification, to facilitate the understanding of the catalyst layer constituting body of this embodiment, firstly, the constitution of a catalyst layer of a conventional fuel cell is explained by reference to drawings. In the description made hereinafter, the explanation is made with respect to the case where a negative electrode active material is formed of gaseous hydrogen and a positive electrode active material is formed of gaseous oxygen. However, it is needless to say that these active materials can be suitably changed corresponding to a reaction, specification and the like adopted by a fuel cell or a cell.

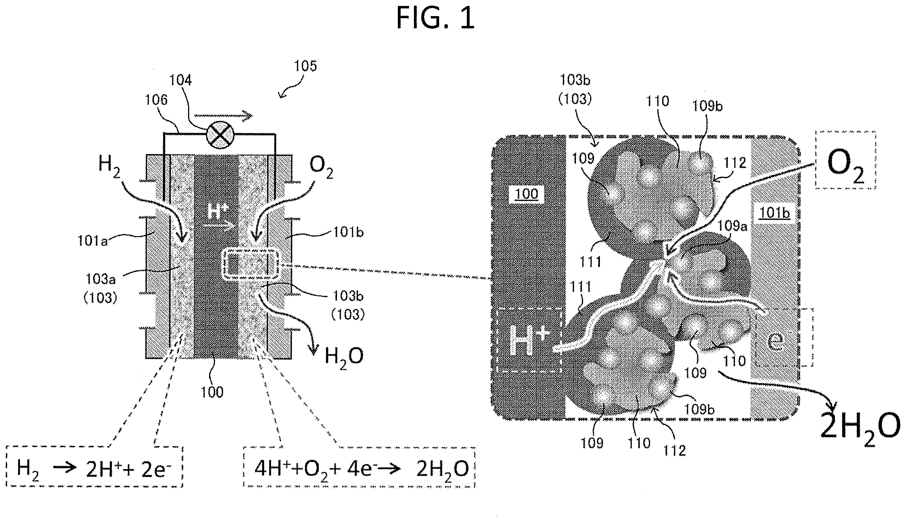

Fig. 1 is an explanatory view schematically showing the call structure of a conventional general-type solid polymer fuel cell. As shown in Fig. 1, a cell 105 of the solid polymer fuel cell includes a solid polymer film 100 which allows protons (H⁺) to permeate therethrough, and a hydrogen-electrode-side electrode 101a and an oxygen-electrode-side electrode 101b arranged on both sides of the solid polymer film 100 respectively. A catalyst layer 103 is provided between the solid polymer film 100 and the hydrogen-electrode-side electrode 101a as well as between the solid polymer film 100 and the oxygen-electrode-side electrode 101b.

Although the specific illustration is omitted, on a hydrogen electrode side, a negative electrode active material supply means for supplying a negative electrode active material (hydrogen) to a catalyst layer provided on the hydrogen electrode side (hereinafter referred to as "hydrogen-electrode-side catalyst layer 103a") is provided. on an oxygen electrode side, a positive electrode active material supply means for supplying a positive electrode active material (oxygen) to a catalyst layer provided on the oxygen electrode side (hereinafter referred to as "oxygen-electrode-side catalyst layer 103b") is provided.

The hydrogen-electrode-side catalyst layer 103a is a part where a reaction that hydrogen supplied as a negative electrode active material is decomposed into protons and electrons is performed. Protons generated in the hydrogen-electrode-side catalyst layer 103a reach an oxygen electrode side through the solid polymer film 100. Electrons reach the oxygen electrode side through a lead line 106 which connects the hydrogen-electrode-side electrode 101a and the oxygen-electrode-side electrode 101b to each other.

On the other hand, the oxygen-electrode-side catalyst layer 103b is a portion where water is generated by a reaction among oxygen which is supplied as a positive electrode active material, protons which reach the oxygen electrode side from the hydrogen electrode side through the solid polymer film 100, and electrons which reach the oxygen electrode side from the hydrogen electrode side through the lead line 106.

According to the cell 105 having such a constitution, by interposing a load 104 in a middle portion of the lead line 106, it is possible to operate the load 104 by electric power generated by the cell 105.

Here, to focus on the constitution of the catalyst layer 103, for example, the oxygen-electrode-side catalyst layer 103b in the conventional cell 105 is, as described in an enlarged view in Fig. 1, constituted of a catalyst layer constituting body 112, and a proton conduction layer 111 which covers a portion of a surface of the catalyst layer constituting body 112.

The catalyst layer constituting body 112 is so-called platinum carbon black where catalyst particles 109 which play a main function as a field of reaction are directly carried on a surface of carbon black 110 to which activation treatment is applied. To be more specific, the catalyst particles 109 are carried on the surface of the carbon black 110 by way of a carboxylic acid generated on a surface of the carbon black 110 by activation treatment.

The proton conduction layer 111 is a layer which is formed of a polymer having proton conductivity, and plays a role of supplying protons which reach an oxygen electrode side to the respective catalyst particles 109 through the solid polymer film 100 while connecting a plurality of catalyst layer constituting bodies 112 to each other.

Due to such a constitution, for example, on a particle surface of the catalyst particles 109a shown in the enlarged view, protons supplied from the solid polymer film 100 through the proton conduction layer 111, electrons supplied from the oxygen-electrode-side electrode 101b through the carbon black 110 which is in contact with the oxygen-electrode-side electrode 101b, and oxygen which permeates a portion of the proton conduction layer 111 formed into a this film shape encounter each other and generate a reaction among them thus forming water.

However, in the above-mentioned conventional catalyst layer 103, the proton conduction layer 111 is merely stuck on the catalyst layer constituting body 112 without generating any outstanding interaction therebetween thus giving rise to a drawback that the proton conduction layer 111 is gradually dissipated due to water generated by a catalytic reaction.

As a result, for example, as in the case of the catalyst particles 109 shown in the drawing, the catalyst particles 109 which are difficult to supply protons are increased in number and hence, the catalyst particles 109 which contribute to the reaction are decreased in number whereby an electromotive force is lowered. Further, due to the dissipation of the proton conduction layer 111, falling of the catalyst particles from the carbon black 110 occurs thus giving rise to a case where the catalyst particles per se are dissipated.

Particularly, in the case where the proton conduction polymer which constitutes the proton conduction layer 111 realizes the proton conductivity by an acidic group (acidic side chains), the proton conduction layer 111 is liable to be dissolved in water and hence, the proton conduction layer 111 has been a significant factor which causes the deterioration of the catalyst layer.

In view of the above, according to the catalyst layer constituting body according to this embodiment, catalyst particles are carried on carbon by way of a carrying layer which is constituted of an upper layer and a lower layer. Further, the upper layer of the carrying layer is formed by using a polymer having proton conductivity, the upper layer forming a proton conduction layer which conducts protons generated in the catalyst particles or protons to be supplied to the catalyst particles, and the lower layer of the carrying layer is formed by using a polymer having affinity with both the proton conduction layer and the carbon, the lower layer forming an adhesive layer which binds the proton conduction layer and carbon to each other. The adhesive layer is formed on a surface of the carbon and the proton conduction layer is formed on a surface of the adhesive layer. The adhesive layer is formed by using a polymer which contains benzene rings and a structure which exhibits basicity in a molecular structure thereof.

Accordingly, the proton conduction layer is arranged on carbon by way of the adhesive layer and hence, the dissipation of the proton conduction layer by water can be prevented as much as possible thus suppressing the deterioration of the catalyst layer and the lowering of an electromotive force.

In this embodiment, the polymer which forms the proton conduction layer and the polymer which forms the adhesive layer may be either an organic compound or an inorganic compound or may be a composite of both compounds.

The catalyst particles used in the catalyst layer constituting body according to this embodiment, for example, the catalyst particles used in the catalyst layer constituting body for forming the hydrogen-electrode-side catalyst layer is not particularly limited provided that the catalyst particles function as a catalyst for a reaction which generates at least protons and electrons by decomposing a negative electrode active material.

Further, for example, the catalyst particles used in the catalyst layer constituting body for forming the oxygen-electrode-side catalyst layer is not particularly limited provided that the catalyst particles function as a catalyst for a reaction among protons, electrons and an anode active material.

That is, such catalyst particles may be either organic particles or inorganic particles or may be a mixture of both components. As the inorganic catalyst particles, for example, metal catalyst particles may preferably be used. To be more specific, platinum-oriented metal such as platinum, ruthenium, cobalt and the like may be preferably used. It is more preferable to use platinum among these platinum-oriented metals. However, the examples of the catalyst particles described here are only listed for an exemplifying purpose and these examples do not prevent the catalyst layer constituting body of this embodiment from adopting known organic and inorganic catalysts not exemplified in this specification or unknown catalysts which may be found out in future.

The adhesive layer is formed by using a polymer which contains benzene rings and a structure which exhibits basicity in a molecular structure thereof. In the explanation made hereinafter, a polymer for forming the adhesive layer is also simply referred to as an adhesive-layer-forming polymer.

Benzene rings in the adhesive-layer-forming polymer are stacked on carbon by an interaction with benzene rings on a surface of carbon constituted of carbon and hence, the adhesive layer is firmly fixed to the surface of carbon. In the explanation made hereinafter, this interaction is also referred to as "carbon-adhesive layer interaction".

The structure of the polymer constituting the adhesive layer which exhibits basicity interacts with an acidic group such as acidic side chains of the polymer constituting the proton conduction layer (hereinafter also simply referred to as "proton conduction layer-forming polymer) and hence, the proton conduction layer is firmly fixed to the adhesive layer. In the explanation made hereinafter, this interaction is also referred to as "adhesive layer-proton conduction layer interaction").

That is, the adhesive layer generates an interaction which becomes an attracting force with respect to both carbon and the proton conduction layer and hence, to consider the catalyst layer constituting body as a whole, the proton conduction layer is fixed more firmly whereby runoff of the proton conduction layer due to moisture or the like can be further prevented.

The catalyst particles may be carried between the upper layer and the lower layer of the carrying layer, that is, may be carried out in a state where the catalyst particles are arranged between the adhesive layer and the proton conduction layer. Due to such a constitution, it is possible to prevent the catalyst particles from falling from the catalyst layer constituting body.

The adhesive layer may be formed by using a polymer where atoms having unpaired electrons are contained in a molecular structure thereof. By forming the adhesive layer using the polymer where atoms having unpaired electrons are contained in a molecular structure thereof, when the catalyst particles are made of a metal catalyst, the atoms having unpaired electrons generate an interaction with metal atoms in the catalyst particles and hence, it is possible to form the adhesive layer having a bonding function also with respect to the catalyst particles. In the explanation made hereinafter, this interaction is also referred to as "adhesive layer-catalyst particles interaction".

The proton conduction layer may be formed by using a polymer having acidic side chains. By forming the proton conduction layer using the polymer having acidic side chains, when the catalyst particles are made of a metal catalyst, it is possible to generate bonding with the proton conduction layer also on the surface of the catalyst and hence, the catalyst layer constituting body can be bonded more firmly.

The proton conduction layer may be formed by using a polymer having acidic side chains, and the catalyst particles may be carried on a surface of the proton conduction layer. Also with such a constitution, the catalyst particles can be firmly carried on the proton conduction layer.

An acidic group of the proton conduction layer, when the catalyst particles are made of metal, generates a bonding force between the acidic group and the catalyst particles and hence, the catalyst particles can be carried by the carrying layer. In the explanation made hereinafter, this interaction is also referred to as "proton conduction layer-catalyst particles interaction".

Although carbon is not particularly limited provided that carbon is contained as a main component and carbon has electron conductivity, the carbon may be one selected from a group consisting of carbon black, graphene and carbon nanotube or a mixture of two or more of these components, for example. Any one of these materials can make benzene rings present on a surface thereof interact with benzene rings of a polymer which constitutes the adhesive layer and hence, it is possible to further prevent the proton conduction layer from running off due to moisture or the like.

Among others, by adopting carbon nanotubes (CNT) as the carbon, it is possible to form the catalyst layer where catalyst layer constituting bodies which are formed in a woven state are stacked in a non-woven state and hence, permeability of an active material into the catalyst layer and an ability of discharging a reaction product can be enhanced. Carbon nanotubes may be multi-layered carbon nanotubes (MWNT) or single-layered carbon nanotubes (SWNT).

The polymer used to form the adhesive layer may comprise polybenzimidazole as a main component. Polybenzimidazole (hereinafter also referred to as "PBI") is a polymer which contains, as a structural formula [Chemical formula 1] expresses, benzene rings which generate a carbon-adhesive layer interaction, portions exhibiting basicity which generate an adhesive layer-proton conduction layer interaction, and atoms ("N" indicated by an arrow) having unpaired electrons which can generate an adhesive layer-catalyst particle interaction in the molecular structure thereof. It is safe to say that polybenzimidazole is one of polymers suitable for forming the adhesive layer. In the chemical formula 1, X indicates a carbon atom or a nitrogen atom.

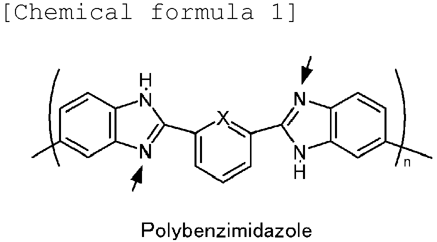

The proton conduction layer may be formed by using a polyvinylphosphonic acid as a main component. A polyvinylphosphonic acid (hereinafter also referred to as "PVPA"), as a structural formula [Chemical formula 2] expresses, contains a large number of phosphonic acids as an acidic group in the molecular structure thereof, and exhibits favorable proton conductivity and exhibits bonding property with respect to metal catalyst particles.

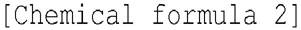

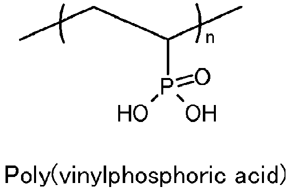

In PVPA, a phosphonic acid is bonded to each two carbons of a main chain so that PVPA has an extremely large number of acidic groups. Accordingly, even when moisture is not supplied to PVPA, PVPA can realize proton conductivity by hopping. Accordingly, it is unnecessary to provide water in a liquid form which has been necessary for proton conduction in conventional fuel cells, it is unnecessary to provide a device for cooling a fuel cell, and it is possible to provide a cell or a fuel cell which has an extremely wide use temperature range.

An extremely large number of acidic groups which PVPA contains, assuming catalyst particles are made of metal, can generate a bonding force between the acidic groups and the catalyst particles and hence, the carrying layer can carry the catalyst particles more firmly.

By stacking the above-mentioned catalyst layer constituting body on an electrode sheet having conductivity such as carbon paper, it is possible to form the electrode provided with a catalyst where the electrode and the catalyst layer are integrally bonded to each other. According to the electrode provided with such a catalyst, it is possible to provide the electrode provided with a catalyst which can prevent the runoff of the proton conduction polymer from the catalyst layer even when moisture is generated.

Further, assuming a case where such an electrode provided with a catalyst is placed on a market as a part for forming a fuel cell or a cell, since the catalyst layer is formed on the electrode in advance, in a step of forming a fuel cell or a cell, a step of forming the catalyst layer can be omitted so that the manufacturing efficiency of fuel cells or cells can be enhanced.

Although the above-mentioned electrode provided with a catalyst may be used as any one of an oxygen electrode, a hydrogen electrode or both electrodes, for example, by using the electrode provided with a catalyst at least as the electrode on an oxygen electrode side, it is possible to prevent a runoff of the proton conduction polymer which may be caused by moisture generated by a reaction.

It is needless to say that a cell can be formed by using such an electrode provided with a catalyst or a fuel cell can be formed by making use of such a cell.

A solid polymer film provided with a catalyst may be formed such that the above-mentioned catalyst layer constituting body is stacked at least on a surface of the solid polymer film on an oxygen electrode side thus forming a catalyst layer. Such a solid polymer film provided with a catalyst can, even when moisture is generated, prevent a runoff of the proton conduction polymer from the catalyst layer.

Although the catalyst layer formed on the above-mentioned solid polymer film may be formed on any one of an oxygen-electrode-side surface, a hydrogen-electrode-side surface or both surfaces, by forming the catalyst layer at least on the oxygen-electrode-side surface, for example, it is possible to prevent a runoff of the proton conduction polymer which may be caused by moisture generated by a reaction.

It is needless to say that a cell can be formed by using such a solid polymer film provided with a catalyst or a fuel cell can be formed by making use of such a cell.

Further, the catalyst layer constituting body according to this embodiment can be prepared by a method of preparing a catalyst layer constituting body of a fuel cell where catalyst particles are carried on carbon, wherein the method includes the steps of: obtaining adhesive-layer-forming polymer deposited carbon where a adhesive-layer-forming polymer is deposited on a surface of the carbon with a large film thickness by preparing a first dispersion medium by dissolving the adhesive-layer-forming polymer which includes a benzene ring and atoms having unpaired electrons in a molecular structure in a first solvent which exhibits solubility to the adhesive-layer-forming polymer, by dispersing the carbon into the first dispersion medium and, thereafter, by collecting a filtered residue after filtering the first dispersion medium; forming adhesive layer formed carbon where a thin-film-like adhesive layer is formed on a surface of the carbon by removing an extra adhesive-layer-forming polymer deposited on the surface of the carbon due to cleaning of the adhesive-layer-forming polymer deposited carbon with the first solvent; forming catalyst-deposited carbon where catalyst particles are deposited on a surface of the adhesive layer by adding catalyst particles or a catalyst raw-material component to a dispersing liquid prepared by dispersing the adhesive layer formed carbon into a second dispersion medium; obtaining a proton conduction layer-forming polymer deposited carbon where a proton conduction layer-forming polymer is deposited on a surface of the catalyst-deposited carbon with a large film thickness by preparing a third dispersion medium by dissolving the proton conduction layer-forming polymer having acidic side chains into a second solvent which exhibits solubility to the proton conduction layer-forming polymer, by dispersing the catalyst-deposited carbon into the third dispersion medium and, thereafter, by collecting a filtered residue after filtering the third dispersion medium: and obtaining a catalyst layer constituting body where a thin-film-like proton conduction layer is formed on a surface of the catalyst-deposited carbon by removing an extra proton conduction layer-forming polymer deposited on the surface of the catalyst-deposited carbon due to cleaning of the proton conduction layer-forming polymer deposited carbon with the second solvent.

In the catalyst layer constituting body obtained by the method of preparing a catalyst layer constituting body, the adhesive layer is formed on the surface of carbon, the proton conduction layer is formed on the surface of the adhesive layer, and the catalyst particles are arranged between the adhesive layer and the proton conduction layer. In the explanation made hereinafter, the method of preparing a catalyst layer constituting body is also referred to as a method of carrying and preparing a catalyst between two layers.

That is, the method of carrying and preparing a catalyst between two layers includes: the step of obtaining adhesive-layer-forming polymer deposited carbon; the step of forming adhesive layer formed carbon; the step of forming catalyst-deposited carbon; the step of obtaining proton conduction layer-forming polymer deposited carbon; and the step of obtaining a catalyst layer constituting body.

The first solvent used in the step of obtaining adhesive-layer-forming polymer deposited carbon in the method of carrying and preparing a catalyst between two layers is not particularly limited provided that the first solvent is a solvent which exhibits solubility to the adhesive-layer-forming polymer. For example, assuming that the adhesive-layer-forming polymer is PBI,dimethylacetamide (DMAc) can be preferably used as the first solvent.

A first dispersion medium used in the step of obtaining adhesive-layer-forming polymer deposited carbon is a dispersion medium for dispersing carbon, and adhesive-layer-forming polymer deposited carbon can be prepared by dissolving a predetermined amount of adhesive-layer-forming polymer in the first solvent.

In filtering which is performed in the step of obtaining adhesive-layer-forming polymer deposited carbon, a known method can be used provided that the known method is a filtering method by which carbon to which adhesive-layer-forming polymer is deposited is filtered and collected from the first dispersion medium. As one example of such a filtering method, for example, suction filtering is named where carbon to which the adhesive-layer-forming polymer is bonded can be trapped using a filter paper or a membrane (hereinafter, these parts being collectively referred to as a filter medium).

Adhesive-layer-forming polymer deposited carbon can be obtained by collecting a filtered residue (filtered material) which is filtered on a filter medium by filtering. Adhesive-layer-forming polymer deposited carbon obtained in this manner exhibits a state where adhesive-layer-forming polymer is deposited on a surface of carbon with a large film thickness thus having a adhesive-layer-forming polymer of an amount exceeding an amount necessary for functioning as an adhesive layer (extra amount). Additionally, it is considered that the adhesive-layer-forming polymer having a large film thickness deposited on a surface of carbon contains the adhesive-layer-forming polymer in the vicinity of the surface of carbon which constitutes the adhesive layer and the extra adhesive-layer-forming polymer deposited on an upper layer of the adhesive-layer-forming polymer in the vicinity of the surface of carbon. Accordingly, as the next step, the step of forming adhesive layer formed carbon by removing the extra adhesive-layer-forming polymer is performed.

In the step of forming the adhesive layer formed carbon, the extra adhesive-layer-forming polymer is removed by cleaning the filtered residue obtained in the step of obtaining the adhesive-layer-forming polymer deposited carbon with the first solvent.

An amount of extra adhesive-layer-forming polymer is determined based on a thickness of the adhesive layer formed on the surface of carbon. The thickness of the adhesive layer may be a thickness of a level at which a carbon-adhesive layer interaction, an adhesive layer-proton conduction layer interaction and an adhesive layer-catalyst particles interaction can be generated, and electrons are movable between carbon and catalyst particles. Accordingly, it is safe to say that the adhesive-layer-forming polymer which is bonded with a thickness exceeding such a thickness constitutes the extra adhesive-layer-forming polymer. For example, assuming that the adhesive-layer-forming polymer is PBI, the thickness of the adhesive layer is set to 1 to 5 nm, and is more preferably set to 2 to 3 nm.

The cleaning performed in the step of forming the adhesive layer formed carbon is performed by filtering which is performed by adding a first solvent to the adhesive-layer-forming polymer deposited carbon which is obtained by filtering in the step of obtaining adhesive-layer-forming polymer deposited carbon. For example, in short, the cleaning can be realized such that the adhesive-layer-forming polymer deposited carbon is obtained on the filter medium by suction filtering and, subsequently, the adhesive-layer-forming polymer deposited carbon is filtered while being rinsed with the first solvent while adding the first solvent on the filter medium. Due to such an operation, adhesive layer formed carbon can be formed on the filter medium. Provided that a method can remove an extra adhesive-layer-forming polymer, cleaning performed in this step is not limited to the above-mentioned method. For example, it is needless to say that adhesive-layer-forming polymer deposited carbon is dispersed in the first solvent once and, thereafter, the adhesive-layer-forming polymer deposited carbon is filtered.

Next, the step is performed where catalyst particles are deposited on the obtained adhesive layer formed carbon thus generating catalyst-deposited carbon.

The second dispersion medium used in the step of generating the catalyst-deposited carbon is not particularly limited provided that the adhesive layer formed carbon can be dispersed in the dispersion medium, and a state where the catalyst particles are bonded to the surface of the adhesive layer can be brought about. As such a second dispersion medium, for example, an ethylene glycol aqueous solution of 10 to 100 % can be used. It is more preferable to use an ethylene glycol aqueous solution of 55 to 65 %.

With respect to "deposited" in the step of generating catalyst-deposited carbon, it is needless to say that "deposited" means a state where adhesive layer formed carbon and catalyst particles are present in mixture in the second dispersion medium and the catalyst particles are bonded to a surface of the adhesive layer. However, "bonding" is a concept which also includes a state where catalyst particles bonded to a surface of the adhesive layer by growing the catalyst raw-material component on the surface of the adhesive layer and hence, "bonded" is a state also includes a state where catalyst particles bonded of the surface of the adhesive layer are brought into a state where catalyst particles deposited on a surface of the adhesive layer.

To grow catalyst particles on a surface of the adhesive layer, for example, when the catalyst particles are made of metal, there can be named a method where catalyst particles are grown while reducing metal salt of the metal in a second dispersion medium. As such metal salt, for example, a chloroplatinic acid (H₂PtCl₆-6H₂O) can be preferably used when the catalyst particles are formed by using platinum.

A second solvent used in the step of obtaining proton conduction layer-forming polymer deposited carbon is not particularly limited provided that the second solvent is a solvent which can resolve a proton conduction layer-forming polymer. For example, when the proton conduction layer-forming polymer is formed of PVPA, water can be used as the second solvent.

A third dispersion medium used in the step of obtaining proton conduction layer-forming polymer deposited carbon is used for depositing the proton conduction layer-forming polymer on a surface of catalyst-deposited carbon by dispersing the catalyst-deposited carbon in the dispersion medium. The third dispersion medium can be prepared by dissolving the proton conduction layer-forming polymer in the second solvent.

In the filtering which is performed in the step of obtaining the proton conduction layer-forming polymer deposited carbon, a known method can be used provided that the method is a filtering method which can filter and collect carbon on which the proton conduction layer-forming polymer is deposited from the third dispersion medium. For example, it is possible to adopt suction filtering or the like in the same manner as the previously-mentioned step of obtaining the adhesive-layer-forming polymer deposited carbon.

Proton conduction layer-forming polymer deposited carbon can be obtained by collecting a filtered residue (filtered material) which is filtered on a filter medium by filtering. Proton conduction layer-forming polymer deposited carbon obtained in this manner exhibits a state where proton conduction layer-forming polymer is deposited on a surface of an adhesive layer and catalyst particles with a large film thickness thus having a proton conduction layer-forming polymer of an amount exceeding an amount necessary for functioning as a proton conduction layer (extra amount). Additionally, it is considered that the proton conduction layer-forming polymer having a large thickness deposited on the surface of the adhesive layer and the catalyst particles contains the proton conduction layer-forming polymer in the vicinity of the adhesive layer and catalyst particles which is necessary for constituting the proton conduction layer and the extra proton conduction layer-forming polymer. Accordingly, as the next step, the step of generating the proton conduction layer formed carbon, that is, the catalyst layer constituting body according to this embodiment is performed by removing the extra proton conduction layer-forming polymer.

In the step of forming the catalyst layer constituting body, the extra proton conduction layer-forming polymer is removed by cleaning the filtered residue obtained in the step of obtaining the proton conduction layer-forming polymer deposited carbon by the second solvent.

An amount of extra proton conduction layer-forming polymer is determined based on a thickness of the proton conduction layer formed on the surface of the adhesive layer and the catalyst particles. The thickness of the proton conduction layer may be a thickness of a level at which an adhesive layer-proton conduction layer interaction and a proton conduction layer- catalyst particles interaction can be generated, and a positive electrode active material (for example, molecular oxygen) or a negative electrode active material (for example, molecular hydrogen) are permeable between the surface of proton conduction layer and catalyst particles. Accordingly, it is safe to say that the proton conduction layer-forming polymer which is deposited exceeding such a thickness constitutes the extra proton conduction layer-forming polymer. For example, when the proton conduction layer-forming polymer is PVPA, the thickness of the proton conduction layer is set to 1 to 5 nm, and is more preferably set to 2 to 3 nm.

The cleaning in the step of forming the catalyst layer constituting body can be performed by filtering which is performed by adding a second solvent to the proton conduction layer-forming polymer deposited carbon which is obtained by filtering in the step of obtaining proton conduction layer-forming polymer deposited carbon. For example, in short, the cleaning can be realized such that the proton conduction layer-forming polymer deposited carbon is obtained on the filter medium by suction filtering and, subsequently, the proton conduction layer-forming polymer deposited carbon is filtered while adding the second solvent on the filter medium. Due to such an operation, catalyst layer constituting body can be formed on the filter medium.

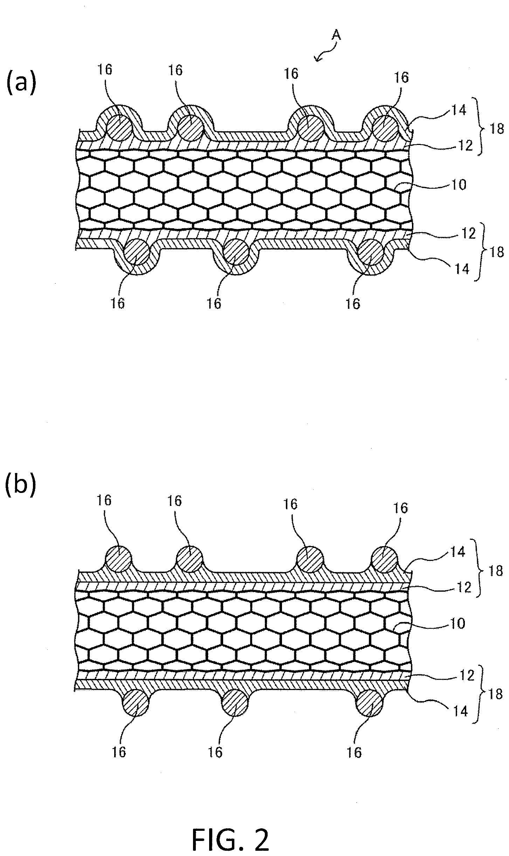

In this manner, the catalyst layer constituting body A prepared by the above-mentioned method of carrying and preparing a catalyst between two layers is configured such that, as shown in Fig. 2 (a), an adhesive layer 12 is formed on a surface (upper layer) of carbon 10, and a proton conduction layer 14 is formed on a surface (upper layer) of the adhesive layer 12, and catalyst particles 16 are carried between the adhesive layer 12 and the proton conduction layer 14. The adhesive layer 12 and the proton conduction layer 14 function also as a carrying layer 18 which carries the catalyst particles 16. Although the carbon 10 is expressed as carbon nanotube as an example of the catalyst layer constituting body A in Fig. 2 (a), as described previously, the carbon 10 is not limited to the carbon nanotube.

Further, in the method of carrying and preparing a catalyst between two layers of this embodiment, a cleaning operation is performed in the step of generating adhesive layer formed carbon and the step of forming the catalyst layer constituting body respectively so as to remove the extra adhesive-layer-forming polymer and the proton conduction layer-forming polymer. Accordingly, a thickness of the carrying layer 18 can be set to an appropriate value and hence, it is possible to perform the transaction of electrons between an electrode and a catalyst layer constituting body which is in contact with the electrode. To be more specific, it is possible to perform the transmission and the reception of electrons between the electrode and carbon of the catalyst layer constituting body thorough the carrying layer 18.

Further, according to this embodiment, as another method of preparing a catalyst layer constituting body, there is provided a method of preparing a catalyst layer constituting body of a fuel cell where catalyst particles are carried on carbon, the method including the steps of: obtaining adhesive-layer-forming polymer deposited carbon where a adhesive-layer-forming polymer is deposited on a surface of the carbon with a large film thickness by preparing a first dispersion medium by dissolving the adhesive-layer-forming polymer which includes benzene rings and a structure which exhibits basicity in a molecular structure in a first solvent which exhibits solubility to the adhesive-layer-forming polymer, by dispersing the carbon into the first dispersion medium and, thereafter, by collecting a filtered residue after filtering the first dispersion medium; generating adhesive layer formed carbon where a thin-film-like adhesive layer is formed on a surface of the carbon by removing an extra adhesive-layer-forming polymer deposited on the surface of the carbon by cleaning the adhesive-layer-forming polymer deposited carbon using the first solvent; obtaining proton conduction layer-forming polymer deposited carbon where a proton conduction layer-forming polymer is deposited on a surface of the adhesive layer formed carbon with a large film thickness by preparing a second dispersion medium by dissolving the proton conduction layer-forming polymer having acidic side chains into a second solvent which exhibits solubility to the proton conduction layer-forming polymer, by dispersing the adhesive layer formed carbon into the second dispersion medium and, thereafter, by collecting a filtered residue after filtering the second dispersion medium: obtaining proton conduction layer formed carbon where a thin-film-like proton conduction layer is formed on a surface of the adhesive layer formed carbon by removing an extra proton conduction layer-forming polymer deposited on a surface of the adhesive layer formed carbon by cleaning the proton conduction layer-forming polymer deposited carbon by the second solvent; and forming a catalyst layer constituting body where catalyst particles are deposited on a surface of the proton conduction layer formed carbon by adding catalyst particles or a catalyst raw-material component to a dispersing liquid prepared by dispersing the proton conduction layer formed carbon in the third dispersion medium.

In the catalyst layer constituting body obtained by the method of preparing a catalyst layer constituting body, the adhesive layer is formed on the surface of carbon, the proton conduction layer is formed on the surface of the adhesive layer, and the catalyst particles are arranged on the surface of the proton conduction layer. In the explanation made hereinafter, the method of preparing a catalyst layer constituting body is also referred to as a proton conduction layer catalyst carrying and preparing method. Further, with respect to the steps substantially equal to the steps of the above-mentioned method of carrying and preparing a catalyst between two layers, the explanation of the steps may be omitted partially.

That is, the proton conduction layer catalyst carrying and preparing method includes: the step of obtaining adhesive-layer-forming polymer deposited carbon; the step of generating adhesive layer formed carbon; the step of obtaining proton conduction layer-forming polymer deposited carbon; the step of generating proton conduction layer formed carbon; and the step of obtaining a catalyst layer constituting body.

The first solvent and the first dispersion medium used in the step of obtaining adhesive-layer-forming polymer deposited carbon in the proton conduction layer catalyst carrying and preparing method are substantially equal to the first solvent and the first dispersion medium used in the above-mentioned method of carrying and preparing a catalyst between two layers. For example, assuming the adhesive-layer-forming polymer is PBI, DMAc can be preferably used as the first solvent. Further, the first dispersion medium can be prepared by dissolving a predetermined amount of adhesive layer formed-polymer in the first solvent. The filtering is also performed in the same manner as the above-mentioned method of carrying and preparing a catalyst between two layers used in the first embodiment, and steps of generating adhesive layer formed carbon are substantially equal to the steps of the method of carrying and preparing a catalyst between two layers used in the first embodiment.

In the proton conduction layer catalyst carrying and preparing method, as a next step, a step of obtaining a proton conduction layer-forming polymer deposited carbon by depositing a proton conduction layer-forming polymer on a surface of the adhesive layer is performed.

A second solvent used in the step of obtaining proton conduction layer-forming polymer deposited carbon is not particularly limited provided that the second solvent is a solvent which can resolve a proton conduction layer-forming polymer. For example, when the proton conduction layer-forming polymer is formed of PVPA, water can be used as the second solvent.

A second dispersion medium used in the step of obtaining proton conduction layer-forming polymer deposited carbon is used for depositing the proton conduction layer-forming polymer on a surface of adhesive layer formed carbon by dispersing the adhesive layer formed carbon in the dispersion medium. The second dispersion medium can be prepared by dissolving the proton conduction layer-forming polymer in the second solvent.

In the filtering which is performed in the step of obtaining the proton conduction layer-forming polymer deposited carbon, a known method can be used provided that the method is a filtering method which can filter and collect carbon on which the proton conduction layer-forming polymer is deposited from the second dispersion medium. For example, it is possible to adopt suction filtering or the like in the same manner as the previously-mentioned method of carrying and preparing a catalyst between two layers.

Proton conduction layer-forming polymer deposited carbon can be obtained by collecting a filtered residue (filtered material) which is filtered by filtering. Proton conduction layer-forming polymer deposited carbon obtained in this manner exhibits a state where proton conduction layer-forming polymer is deposited on a surface of an adhesive layer with a large film thickness thus having a proton conduction layer-forming polymer of an amount exceeding an amount necessary for functioning as a proton conduction layer (extra amount). As the next step, the step of generating the proton conduction layer formed carbon by removing the extra proton conduction layer-forming polymer is performed.

In the step of generating the proton conduction layer formed carbon, the extra proton conduction layer-forming polymer is removed by cleaning the filtered residue obtained in the step of obtaining the proton conduction layer-forming polymer deposited carbon by the second solvent.

An amount of extra proton conduction layer-forming polymer is determined based on a thickness of the proton conduction layer formed on the surface of the adhesive layer. The thickness of the proton conduction layer may be a thickness of a level at which an adhesive layer-proton conduction layer interaction and a proton conduction layer-catalyst particles interaction which is expected between the proton conduction layer and catalyst particles deposited on a surface (upper surface) of the proton conduction layer in a later step can be generated, and electrons are permeable between carbon and catalyst particles, that is, by way of the adhesive layer and the proton conduction layer (by way of the carrying layer. Accordingly, it is safe to say that the proton conduction layer-forming polymer which is deposited exceeding such a thickness constitutes the extra proton conduction layer-forming polymer. For example, when the proton conduction layer-forming polymer is PVPA, the thickness of the proton conduction layer is set to 1 to 5nm, and is more preferably set to 2 to 3nm.

The cleaning performed in the step of generating the proton conduction layer formed carbon is performed by filtering which is performed by adding a second solvent to the proton conduction layer-forming polymer deposited carbon which is obtained by filtering in the step of obtaining proton conduction layer-forming polymer deposited carbon. For example, in short, the cleaning can be realized such that the proton conduction layer-forming polymer deposited carbon is obtained on the filter medium by suction filtering and, subsequently, the proton conduction layer-forming polymer deposited carbon is filtered while adding the second solvent to the filter medium. Due to such an operation, the proton conduction layer formed carbon can be generated on the filter medium.

In the proton conduction layer catalyst carrying and preparing method, as a next step, a step of generating catalyst-deposited carbon by depositing catalyst particles on the proton conduction layer formed carbon, that is, a step of forming a catalyst layer constituting body is performed.

The third dispersion medium used in the step of forming the catalyst layer constituting body is not particularly limited provided that the proton conduction layer formed carbon can be dispersed in the third dispersion medium, and a state where the catalyst particles are deposited on the surface of the proton conduction layer can be brought about. As such a third dispersion medium, for example, an ethylene glycol aqueous solution of 10 to 100 % can be used. It is more preferable to use an ethylene glycol aqueous solution of 55 to 65 %.

With respect to "deposited" in the step of forming catalyst layer constituting body, it is needless to say that "deposited" means a state where proton conduction layer formed carbon and catalyst particles are present in mixture in the third dispersion medium so that the catalyst particles are bonded to a surface of the proton conduction layer. However, "deposited" is a concept which also includes a state where catalyst particles bonded to a surface of the proton conduction layer are formed by growing a catalyst raw-material component on the surface of the proton conduction layer by adding the catalyst raw-material component together with the proton conduction layer formed carbon.

To grow catalyst particles on a surface of the proton conduction layer, for example, when the catalyst particles are made of metal, there can be named a method where catalyst particles are grown while reducing metal salt of the metal in a third dispersion medium. As such metal salt, for example, a chloroplatinic acid (H₂PtCl₆-6H₂O) can be preferably used.

In this manner, the catalyst layer constituting body B prepared by the above-mentioned proton conduction layer catalyst carrying and preparing method is configured such that, as shown in Fig. 2 (b), an adhesive layer 12 is formed on a surface (upper layer) of carbon 10, and a proton conduction layer 14 is formed on a surface (upper layer) of the adhesive layer, and catalyst particles 16 are carried on a surface of the proton conduction layer 14. The adhesive layer 12 and the proton conduction layer 14 function also as a carrying layer 18 which carries the catalyst particles 16. Although the carbon 10 is expressed as carbon nanotube as an example of the catalyst layer constituting body B in Fig. 2 (b), as described previously, the carbon 10 is not limited to the carbon nanotube.

Further, in the same manner as the method of carrying and preparing a catalyst between two layers, also in the proton conduction layer catalyst carrying and preparing method, a cleaning operation is performed in the step of generating adhesive layer formed carbon and the step of generating the proton conduction layer formed carbon respectively so as to remove the extra adhesive-layer-forming polymer and the proton conduction layer-forming polymer. Accordingly, a thickness of the carrying layer 18 can be set to an appropriate value and hence, it is possible to perform the transaction of electrons between an electrode and a catalyst layer constituting body which is in contact with the electrode. To be more specific, it is possible to perform the transmission and the reception of electrons between the electrode and carbon of the catalyst layer constituting body through the carrying layer 18.

Next, examples are further specifically explained by reference to the drawings.

### [1. Preparation of catalyst layer constituting body by a method of carrying and preparing a catalyst between two layers]

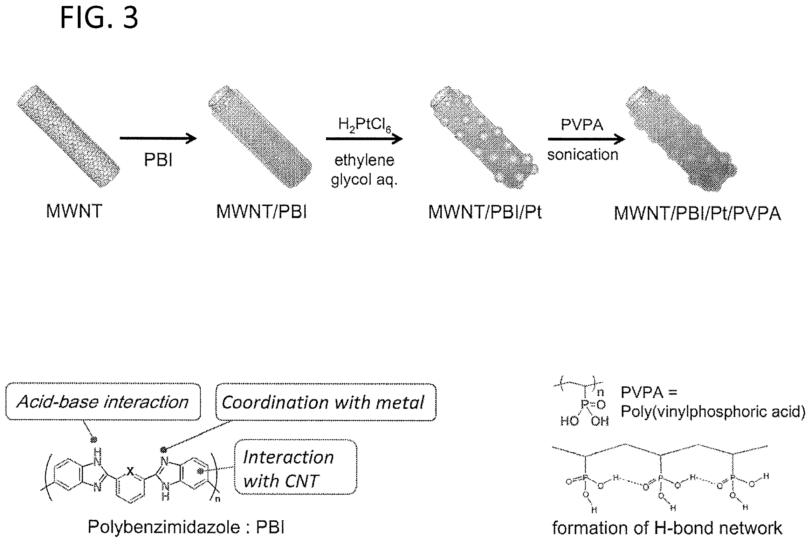

The preparation of a catalyst layer constituting body in this example is performed by a method of carrying and preparing a catalyst between two layers in accordance with steps shown in Fig. 3. Multi-layered carbon nanotubes (MWNT) are used as carbon, PBI is used as a adhesive-layer-forming polymer, and PVPA is used as a proton conduction layer-forming polymer. Catalyst particles are made of platinum. Catalyst particles are formed such that catalyst particles are made to grow on a surface of an adhesive layer using chloroplatinic acid (H₂PtCl₆·6H₂O) as a catalyst raw-material component.

### (Generation of adhesive layer formed carbon)

Firstly, MWNT covered with PBI, that is, adhesive layer formed carbon is formed. In the explanation made hereinafter, MWNT covered with PBI may be referred to as "MWNT/PBI". An intermediate product such as proton conduction layer formed carbon and a catalyst layer constituting body may also be expressed using the substantially same format.

A first dispersion medium is prepared by sufficiently dissolving polybenzimidazole (PBI: 4mg) which constitutes a adhesive-layer-forming polymer into dimethyl acetamide (DMAc: 20ml, KISHIDA CHEMICAL Co.,Ltd.) which constitutes a first solvent.

Next, multi-layered carbon nanotubes (MWNT: 20mg, made by NIKKISO CO., LTD.) which constitutes carbon is added to the first dispersion medium, and sonication is applied to the first dispersion medium using a bath-type sonicator (5510, made by BRANSON) for 2 hours.

Such a solution is preliminarily filtered using a gauze, and the filtered solution is subjected to the suction filtration (membrane filter 0.2µm PTFE) . Adhesive-layer-forming polymer deposited carbon is obtained on a membrane filter which constitutes a filter medium (step of obtaining adhesive-layer-forming polymer deposited carbon).

Then, the adhesive-layer-forming polymer deposited carbon on the membrane filter is sufficiently cleaned using DMAc (first solvent) which is a solvent having a favorable affinity with PBI. Black powder remaining after cleaning is collected on a filter paper, and is dried at 60°C under a reduced pressure for 4 to 6 hours. As the result, 13mg of MWNT/PBI which constitutes adhesive layer formed carbon is obtained (step of generating adhesive layer formed carbon).

### (Generation of catalyst-deposited carbon)

Next, MWNT/PBI/Pt, that is, catalyst-deposited carbon is generated. 60% ethylene glycol solution (30ml) and MWNT/PBI (15mg) which constitute a second dispersion medium are charged in a sample bottle, and the second dispersion medium is subjected to a sonication.

After the sufficient dispersion of MWNT/PBI is confirmed by naked eyes, a catalyst raw-material solution which is obtained by dissolving chloroplatinic acid (H₂PtCl₆·6H₂O, 36mg) which constitutes a catalyst raw-material component into 60% ethylene glycol solution (45ml) is added in the sample bottle, and MWNT/PBI and the catalyst raw-material solution are sufficiently mixed.

Thereafter, 100mL of the mixed solution in the sample bottle is transferred to a three neck flask, is refluxed at 140°C for 6 hours, and is cooled to a room temperature and, thereafter, a filtered material is collected by the suction filtration (membrane filter made of 1µm PTFE) . Obtained powder is dried at 60°C under a reduced pressure for 4 to 6 hours (together with phosphorus pentaoxide which constitutes a desiccant). 16mg of MWNT/PBI/Pt which constitutes catalyst-deposited carbon is obtained (step of generating catalyst-deposited carbon).

### (Confirmation of generation of catalyst-deposited carbon)

It is confirmed whether or not obtained MWNT/PBI/Pt has the constitution of catalyst-deposited carbon which obtained MWNT/PBI/Pt is expected to have. To be more specific, the observation is made using an electron microscope with respect to whether or not an adhesive layer made of PBI is formed on the MWNT and catalyst particles are deposited on the adhesive layer.

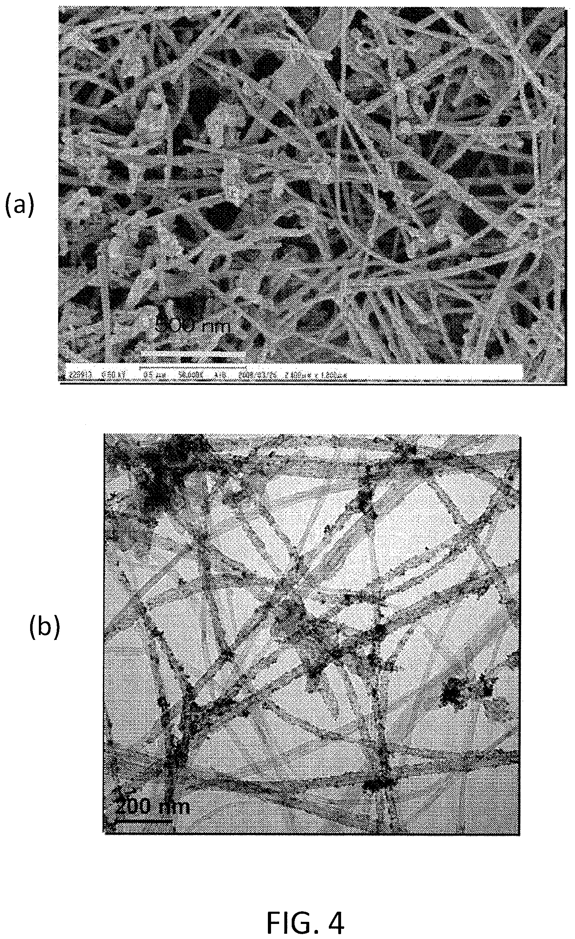

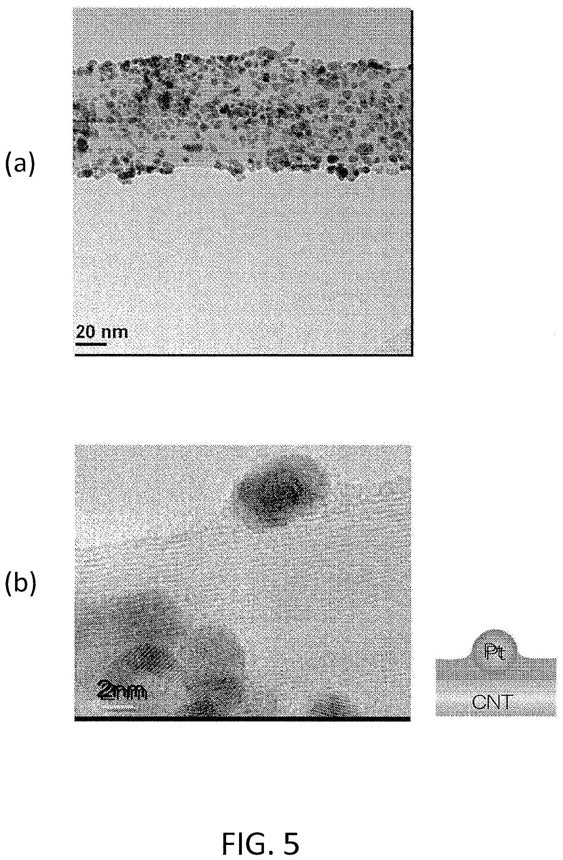

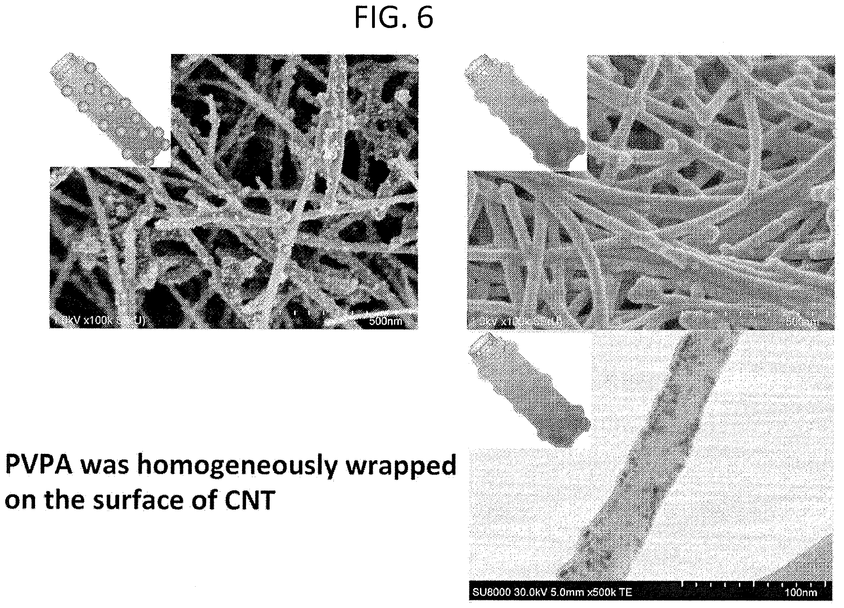

A microscopic examination image of the MWNT/PBI/Pt is shown in Fig. 4, Fig. 5 and in a photograph on a left side in Fig. 6. As can be understood from an SEM image shown in Fig. 4(a) and the photograph on the left side in Fig. 6, the catalyst-deposited carbon is observed in a state where a large number of fibers are gathered in an overlapping manner or in a folded manner. Further, from an STEM image shown in Fig. 4(b), it is observed that a countless black spots are deposited along the MWNT.

Fig. 5 shows a further enlarged microscopic examination image. As can be understood also from an STEM image shown in Fig. 5 (a), it is observed that countless catalyst particles made of platinum are deposited on a periphery of MWNT. Further, a state shown in the schematic view where catalyst particles are deposited on the periphery of MWNT by way of an adhesive layer is observed from an STEM image shown in Fig. 5(b).

From a result of these microscopic examinations, it is proved that MWNT/PBI/Pt has the constitution which catalyst-deposited carbon is required to have, that is, the structure where an adhesive layer made of PBI is formed on MWNT, and catalyst particles are deposited on the adhesive layer.

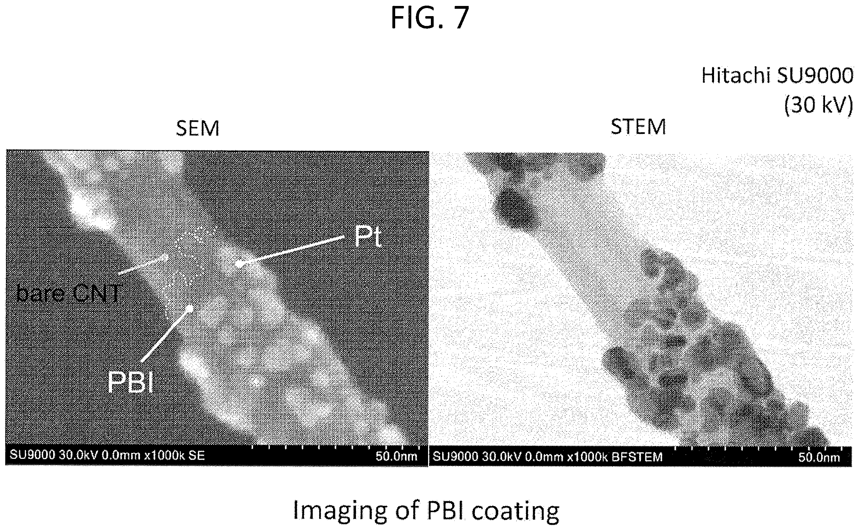

Fig. 7 shows a microscopic examination image showing a boundary on MWNT between a portion where the adhesive layer made of PBI is formed and a portion where the adhesive layer made of PBI is not formed.

In general, when a carbon nanotube is adopted as carbon in making carbon carry a metal catalyst, a surface of the carbon nanotube is uniformly formed by six-membered rings made of carbon and hence, it is difficult for carbon to carry an amount of metal catalysts necessary for practical use. This can be understood also from a fact that catalyst particles made of platinum are not deposited on portions where an adhesive layer is not formed shown in Fig. 7.

On the other hand, when an adhesive layer is formed on MWNT as in the case of this example, as can be understood also from the portion where an adhesive layer is formed as shown in Fig. 7, an extremely large number of catalyst particles are deposited on the adhesive layer. In this manner, it is proved that the adhesive layer exhibits extremely excellent advantageous effects in making carbon carry catalyst particles.

### (Formation of catalyst layer constituting body)

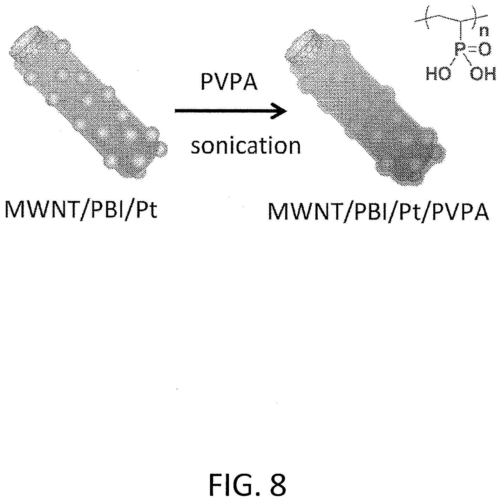

Next, as shown in Fig. 8, MWNT/PBI/Pt/PVPA, that is, a catalyst layer constituting body is formed. Water (30ml) which constitutes a second solvent and PVPA 30% aqueous solution (2mL: made by Polysciences) which constitutes a proton conduction layer-forming polymer are charged in a 50ml sample bottle, and water and the aqueous solution are stirred thus preparing a third dispersion medium. MWNT/PBI/Pt (10mg) is added to the third dispersion medium, and MWNT/PBI/Pt is sufficiently dispersed into the third dispersion medium by applying sonication to the mixture for 5 minutes.

This dispersing liquid is stirred at a room temperature for 6 hours and, thereafter, is filtered using a membrane filter (1.0µm:PTFE). Proton conduction layer-forming polymer deposited carbon is obtained on the membrane filter which constitutes a filter medium (step of obtaining proton conduction layer-forming polymer deposited carbon).

Then, the proton conduction layer-forming polymer deposited carbon on the membrane filter is sufficiently cleaned using water (second solvent), and is dried at 60°C under a reduced pressure for 4 to 6 hours (together with phosphorus pentaoxide which constitutes a desiccant). Due to such steps, 11.04mg of MWNT/PBI/Pt/PVPA which constitutes a catalyst layer constituting body is obtained (step of forming catalyst layer constituting body).

### (Confirmation of formation of catalyst layer constituting body)

It is confirmed whether or not obtained MWNT/PBI/Pt/PVPA has the constitution of a catalyst layer constituting body which obtained MWNT/PBI/Pt/PVPA is expected to have. To be more specific, it is confirmed whether or not MWNT/PBI/Pt/PVPA has the constitution where an adhesive layer is formed on a surface (upper layer) of MWNT, a proton conduction layer made of PVPA is formed on a surface (upper layer) of the adhesive layer, and catalyst particles are carried between the adhesive layer and the proton conduction layer.

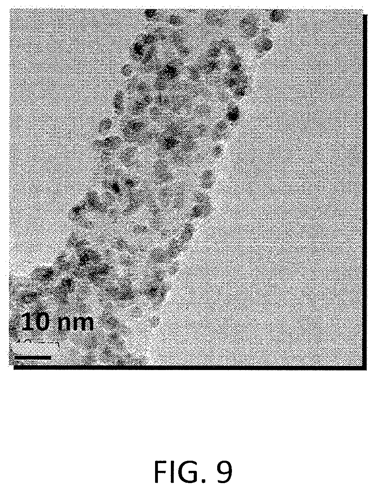

A photograph on a right upper side in Fig. 6 shows an SEM image of MWNT/PBI/Pt/PVPA, and a photograph on a right lower side in Fig. 6 and Fig. 9 show an STEM image of MWNT/PBI/Pt/PVPA. From the STEM image shown on the right side in Fig. 6 and the STEM image shown in Fig. 9, it is observed that catalyst particles are held on a periphery of MWNT in a state where the catalyst particles are covered with PVPA.

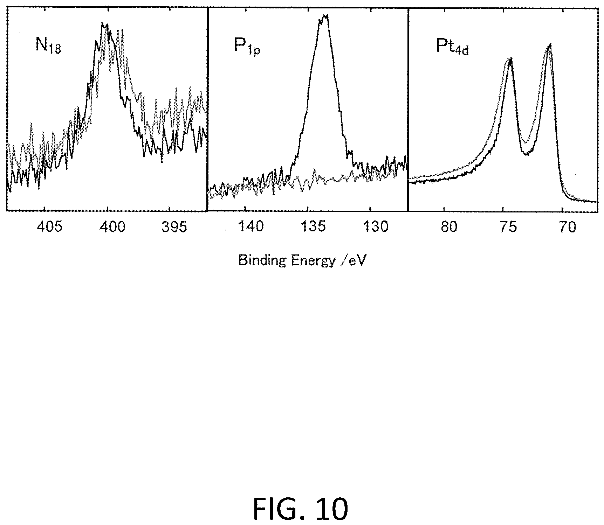

Next, spectrum of MWNT/PBI/Pt and spectrum of MWNT/PBI/Pt/PVPA which are obtained by X-ray photoelectronic spectrometry are shown in Fig. 10. In Fig. 10, a dark solid line indicates spectrum of MWNT/PBI/Pt/PVPA, and a light solid line indicates spectrum of MWNT/PBI/Pt.

As can be understood also from spectrum on a left side in Fig. 10, a photoelectron peak having energy unique to nitrogen is observed in both MWNT/PBI/Pt and MWNT/PBI/Pt/PVPA. Accordingly, it is proved that both MWNT/PBI/Pt and MWNT/PBI/Pt/PVPA which are obtained by preparation include an adhesive layer made of PBI.

In spectrum shown in the center of Fig. 10, a photoelectron peak having an energy unique to phosphorus is observed in MWNT/PBI/Pt/PVPA, while a photoelectron peak having an energy unique to phosphorus is not observed in MWNT/PBI/Pt. From such a result, it is proved that a proton conduction layer made of PVPA which is not yet formed at a point of time where MWNT/PBI/Pt is prepared is present at a point of time where MWNT/PBI/Pt/PVPA is prepared.

As can be understood also from spectrum on a right side in Fig. 10, a photoelectron peak having energy unique to platinum is observed in both MWNT/PBI/Pt and MWNT/PBI/Pt/PVPA. Accordingly, it is proved that both MWNT/PBI/Pt and MWNT/PBI/Pt/PVPA which are obtained by preparation include catalyst particles made of platinum.

From these results, it is proved that MWNT/PBI/Pt/PVPA obtained by the method of carrying and preparing a catalyst between two layers has the constitution of the catalyst layer constituting body. That is, MWNT/PBI/Pt/PVPA has the constitution where an adhesive layer is formed on a surface (upper layer) of MWNT, a proton conduction layer made of PVPA is formed on a surface (upper layer) of the adhesive layer, and catalyst particles are carried between the adhesive layer and the proton conduction layer.

### (Examination of activity of catalyst particles)

Next, the activity of catalyst particles of the catalyst layer constituting body obtained by the method of carrying and preparing a catalyst between two layers is examined.

In this examination, MWNT/PBI/Pt where catalyst particles are exposed to an outer surface of MWNT/PBI/Pt and MWNT/PBI/Pt/PVPA where surfaces of catalyst particles are covered with a proton conduction layer are used as objects to be compared to each other. The evaluation is made based on electrochemical catalytic activity (ECSA) of MWNT/PBI/Pt and electrochemical catalytic activity (ECSA) of MWNT/PBI/Pt/PVPA measured by an electrochemical measurement.

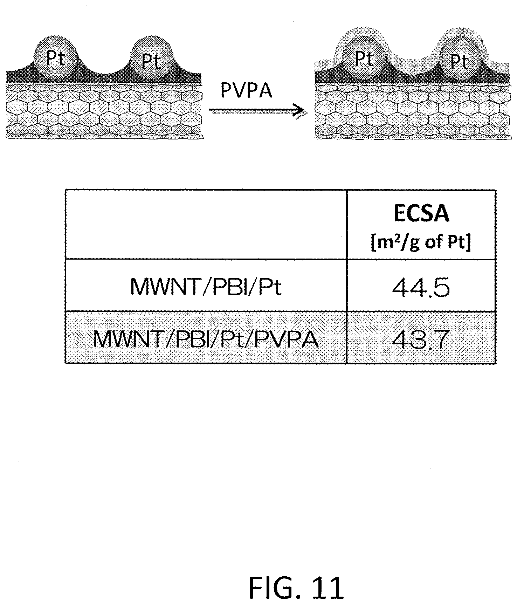

As the result, as shown in Fig. 11, it is proved that although the difference at a level substantially considered as an error is recognized between MWNT/PBI/Pt and MWNT/PBI/Pt/PVPA with respect to a value of ECSA, the values of ECSA are substantially equal. That is, it is proved that although the catalyst layer constituting body obtained by the method of carrying and preparing a catalyst between two layers includes the proton conduction layer, there is no possibility that gaseous molecules are prevented from reaching catalyst particles by the proton conduction layer and hence, the catalyst layer constituting body obtained by the method of carrying and preparing a catalyst between two layers can contribute to the reaction.

### [2. Preparation of catalyst layer constituting body by a proton conduction layer catalyst carrying and preparing method]

Next, a catalyst layer constituting body is prepared by a proton conduction layer catalyst carrying and preparing method. The preparation of the catalyst layer constituting body by the proton conduction layer catalyst carrying and preparing method differs from the preparation of the catalyst layer constituting body by the above-mentioned method of carrying and preparing a catalyst between two layers mainly with respect to timing at which catalyst-deposited carbon is formed. Accordingly, the explanation is omitted with respect to the details of the operations of the respective methods.

Also in the preparation of a catalyst layer constituting body by the proton conduction layer catalyst carrying and preparing method, multi-layered carbon nanotubes (MWNT) are used as carbon, PBI is used as a adhesive-layer-forming polymer, and PVPA is used as a proton conduction layer-forming polymer. Catalyst particles are made of platinum. Catalyst particles are formed such that catalyst particles are made to grow on a surface of an adhesive layer using a chloroplatinic acid (H₂PtCl₆·6H₂O) as a catalyst raw-material component.

### (Generation of adhesive layer formed carbon)

By performing operations substantially equal to the operations performed in the method of carrying and preparing a catalyst between two layers, MWNT covered with PBI, that is, adhesive layer formed carbon is formed. That is, MWNT/PBI which constitutes adhesive layer formed carbon is obtained by performing steps substantially equal to the steps of obtaining adhesive-layer-forming polymer deposited carbon and the steps of generating adhesive layer formed carbon.

### (Generation of proton conduction layer formed carbon)

Next, by performing operations substantially equal to the operations performed in the steps of obtaining proton conduction layer-forming polymer deposited carbon and the steps of forming catalyst layer constituting body by the method of carrying and preparing a catalyst between two layers, MWNT/PBI/PVPA, that is, proton conduction layer formed carbon is generated.

### (Generation of catalyst-deposited carbon)

Next, by performing operations substantially equal to the operations performed in the step of generating catalyst-deposited carbon of the method of carrying and preparing a catalyst between two layers, MWNT/PBI/PVPA/Pt, that is, the catalyst layer constituting body is formed.

### (Confirmation of formation of catalyst layer constituting body)

It is confirmed whether or not obtained MWNT/PBI/PVPA/Pt has the constitution of a catalyst layer constituting body which obtained MWNT/PBI/PVPA/Pt is expected to have. To be more specific, it is confirmed whether or not MWNT/PBI/PVPA/Pt has the constitution where an adhesive layer is formed on a surface (upper layer) of MWNT, a proton conduction layer made of PVPA is formed on a surface (upper layer) of the adhesive layer, and catalyst particles are carried on a surface of the adhesive layer. In the same manner as the above-mentioned formation confirmation test of the catalyst layer constituting body formed by the method of carrying and preparing a catalyst between two layers, from an electron microscope image and a result of an X-ray photoelectronic spectrometry, it is proved that MWNT/PBI/PVPA/Pt obtained by the proton conduction layer catalyst carrying and preparing method has the above-mentioned constitution.

### (Examination of activity of catalyst particles)

Next, in the catalyst layer constituting body obtained by the proton conduction layer catalyst carrying and preparing method, catalyst particles are brought into a state where the catalyst particles are exposed on a surface of the catalyst layer constituting body and hence, the evaluation of a surface area of electrochemical catalytic activity (ECSA) is omitted.

### [3. Proton conduction layer runoff test 1]

Next, inventors have studied runoff of a proton conduction layer caused by moisture using two kinds of prepared catalyst layer constituting bodies (MWNT/PBI/Pt/PVPA and MWNT/PBI/PVPA/Pt) according to this embodiment and one catalyst layer constituting body provided with no adhesive layer (MWNT/Nafion/Pt) .

To be more specific, the respective catalyst layer constituting bodies are added in a flask which is filled with a predetermined amount of water, and the catalyst layer constituting bodies and water are sufficiently stirred and, thereafter, are filtered. An obtained filtered material is observed using an electron microscope.

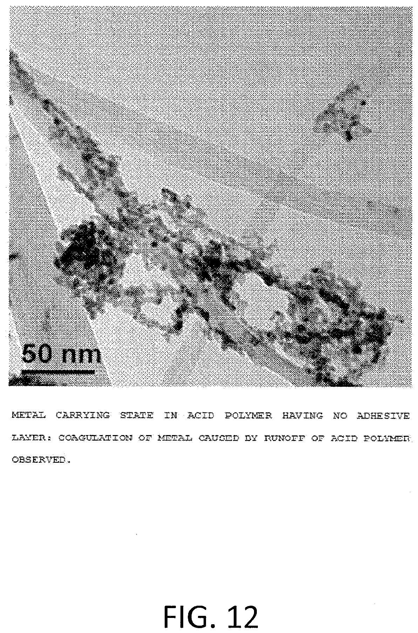

As the result, both of two kinds of catalyst layer constituting bodies according to this embodiment maintain the constitutions substantially equal to the constitutions of the catalyst layer constituting bodies before the examination is performed. To the contrary, with respect to the catalyst layer constituting body provided with no adhesive layer, as can be understood from a microscopic examination image shown in Fig. 12, it is observed that a proton conduction layer (Nafion) runs off and platinum which constitutes catalyst particles is separated in a coagulated manner.

The above-mentioned examinations are carried out under stricter conditions compared to humidification performed on a hydrogen electrode side of a fuel cell and moisture generated by a reaction on an oxygen electrode side. Accordingly, it is proved that the catalyst layer constituting body according to this embodiment can prevent runoff of a proton conduction layer (PVPA) . That is, it is proved that the catalyst layer constituting body can prevent runoff of the proton conductive polymer from the catalyst layer even when moisture is generated during an operation of a fuel cell.

Further, catalyst particles are not removed even under such strict conditions and hence, it is suggested that lowering of an electromotive force or the like attributed to the removal catalyst particles can be also suppressed.

### [4. Manufacture of electrode provided with a catalyst]

Next, an electrode provided with a catalyst is formed by using the obtained catalyst layer constituting body (MWNT/PBI/Pt/PVPA), and an electrode provided with a catalyst is formed by using the obtained catalyst layer constituting body (MWNT/PBI/PVPA/Pt).

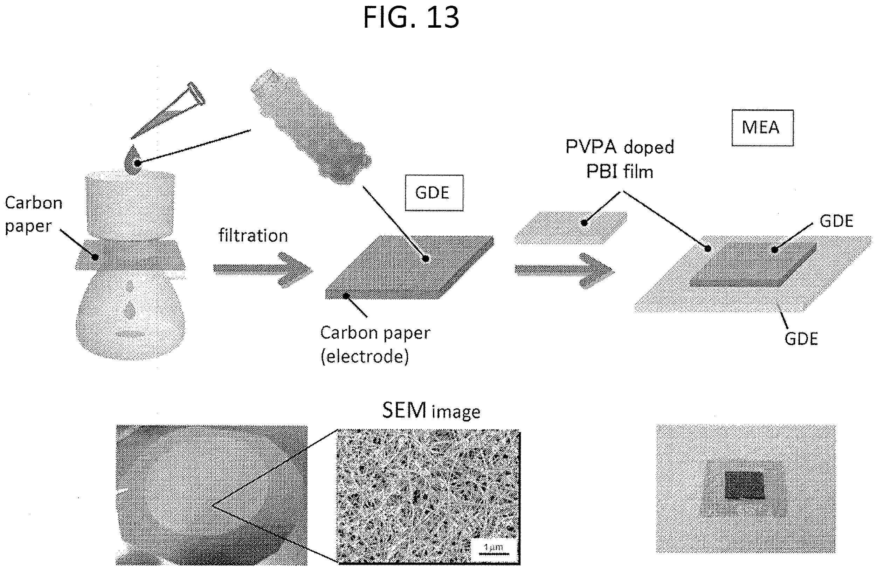

Firstly, a catalyst layer constituting body dispersing liquid is prepared by dispersing 12mg of a catalyst layer constituting body into a 2-propanol 80% aqueous solution which constitutes a dispersion medium. Next, as shown in Fig. 13, the catalyst layer constituting body dispersing liquid is supplied to a suction filtration device where a filter medium is formed of a carbon paper (made by SGL Carbon, thickness: 246µm), and a catalyst layer constituting body is deposited on the carbon paper thus forming a catalyst layer. The carbon paper has conductivity, and plays a role of an electrode sheet which constitutes a portion of the cell.

A state where the catalyst layer constituting body (MWNT/PBI/Pt/PVPA) is deposited on a surface of the carbon paper is shown in a lower portion of Fig. 13. In this example, the carbon paper on which the catalyst layer constituting body is deposited is cut into a predetermined size (1cm square, for example), and the cut material is used as an electrode provided with a catalyst. As can be understood from the SEM image shown in the lower portion of Fig. 13, the catalyst layer formed into the electrode provided with a catalyst is configured such that catalyst layer constituting bodies observed as long fibers are deposited in a non-woven fabric state. The substantially same constitution is observed in the result of a microscope examination of an electrode provided with a catalyst formed by using MWNT/PBI/PVPA/Pt.

### [5. Manufacture of cell]

Next, a cell is formed by using an electrode provided with a catalyst obtained in the above-mentioned [4. Manufacture of electrode provided with a catalyst].

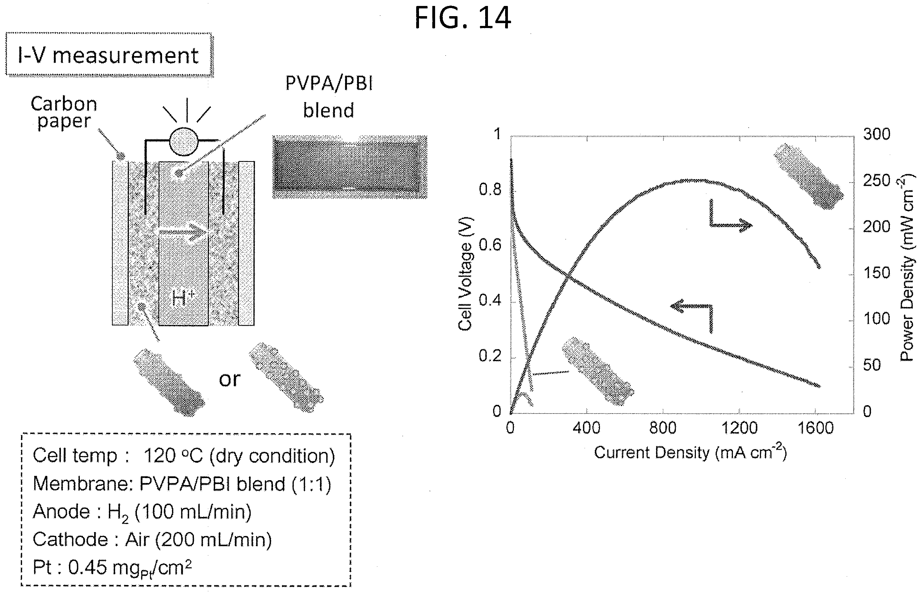

In this example, a mixed film of PVPA and PBI is used as a solid polymer film and, as shown in Fig. 13, the solid polymer film is sandwiched by electrodes provided with a catalyst from both surfaces of the solid polymer film thus forming a cell shown in a schematic view on a left side in Fig. 14. In such a schematic view, a negative electrode active material supply means for supplying a negative electrode active material to a catalyst layer and a positive electrode active material supply means for supplying a positive electrode active material to a catalyst layer are omitted for the convenience of the explanation. However, it is needless to say that an actually formed cell includes these active material supply means and other members necessary for the constitution of the cell.

The mixed film of PVPA and PBI is formed such that PBI and PVPA are dissolved in a DMAc (dimethyl acetamide) solution, and the solution is casted on a glass plate and is dried. Further, the solid polymer film is sandwiched by the electrodes provided with a catalyst in a state where a catalyst layer side of the electrode provided with a catalyst faces a solid polymer film in an opposed manner.

### [6. Characteristic of cell]

### (Comparison between MWNT/PBI/Pt/PVPA cell and MWNT/PBI/Pt cell)

Next, characteristics of formed cells are examined. To be more specific, as shown in Fig. 14, a temperature of the cell is set to 120°C, hydrogen is supplied as a negative electrode active material, and air is supplied as a positive electrode active material. An amount of platinum applied to the electrode provided with a catalyst for the examination is 0.45mg per 1cm².

Further, in this examination test, a cell which includes a catalyst layer formed by using MWNT/PBI/Pt is used as a comparison object. A result of the comparison is shown on a right side of Fig. 14.

As shown in a graph of Fig. 14, it is proved that the cell according to this embodiment has a high power density compared to the cell which constitutes the comparison object.

It is also proved that although an output is extremely small when a proton conduction layer is not provided (MWNT/PBI/Pt), an output of high density is acquired when a proton conduction layer is provided (MWNT/PBI/Pt/PVPA). Accordingly, it is safe to say that the proton conduction layer in the catalyst layer constituting body obtained by the method of carrying and preparing a catalyst between two layers contributes to proton conduction. It is also safe to say that proton conduction occurs extremely smoothly.

From these results, it is suggested that the cell or the fuel cell according to this embodiment can exhibit an extremely excellent performance. Although the illustration of specific data is omitted, it is understood that the cell which uses the electrode provided with a catalyst formed by using MWNT/PBI/PVPA/Pt can also acquire the performance substantially equal to the performance of the cell which uses the electrode provided with a catalyst formed by using MWNT/PBI/Pt/PVPA.

### [8. Comparison test (1) between present invention cell and conventional-type cell]

Next, inventors have studied a change in an electromotive force characteristic attributed to runoff of a proton conduction layer caused by water with respect to a catalyst layer constituting body provided with an adhesive layer according to this embodiment and a conventional catalyst layer constituting body.

To be more specific, a test is carried out using two kinds of catalyst layer constituting bodies according to this embodiment and one conventional catalyst layer constituting body shown in an enlarged view of Fig. 1 (Nafion being deposited).

In the test, the inventors have studied a change in an electromotive force characteristic of a cell formed by using a catalyst layer constituting body which is already cleaned with water compared to a cell formed by using a catalyst layer constituting body which is not yet cleaned with water.

As the result, an electromotive force characteristic of the cell formed by using the conventional catalyst layer constituting body (already cleaned with water) is largely deteriorated due to runoff of a proton conduction layer-forming polymer compared to the cell formed by using the conventional catalyst layer constituting body (not yet cleaned with water) . On the other hand, an electromotive force characteristic of the cell (MWNT/PBI/Pt/PVPA and MWNT/PBI/PVPA/Pt) formed by using the catalyst layer constituting body (already cleaned with water) according to this embodiment is not deteriorated due to runoff of a proton conduction layer-forming polymer even compared to the cell formed by using a catalyst layer constituting body (not yet cleaned with water) according to the present invention.

Also from this examination, it is proved that the catalyst layer constituting body according to this embodiment can prevent runoff of the proton conduction layer (PVPA) . That is, it is proved that the catalyst layer constituting body can prevent runoff of the proton conductive polymer from the catalyst layer even when moisture is generated by an operation of a fuel cell.

### [9. Comparison test (2) between present invention cell and conventional-type cell]

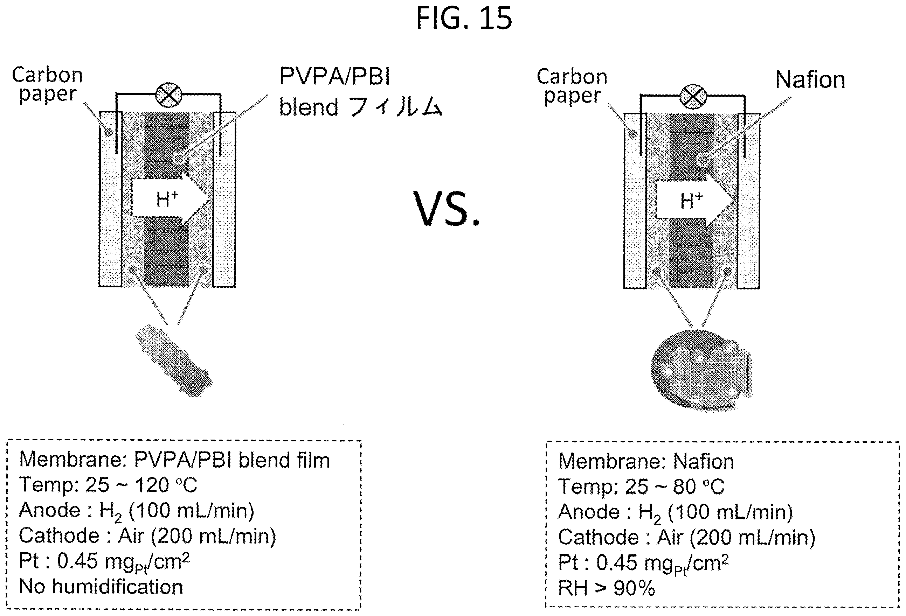

Next, a comparison test is carried out between a cell (MWNT/PBI/Pt/PVPA) according to this embodiment and a conventional-type cell (Fig. 15). To be more specific, a cell shown in Fig. 1 where Nafion (registered trademark) is used as a solid polymer film is used as a conventional-type cell which constitutes a comparison object. Humidification is required in generating electric power in this comparison object cell and hence, hydrogen which constitutes a negative electrode active material is supplied to the cell in a state where the cell is humidified to 90% or more. On the other hand, humidification is unnecessary in the cell according to this embodiment and hence, the cell is not humidified.

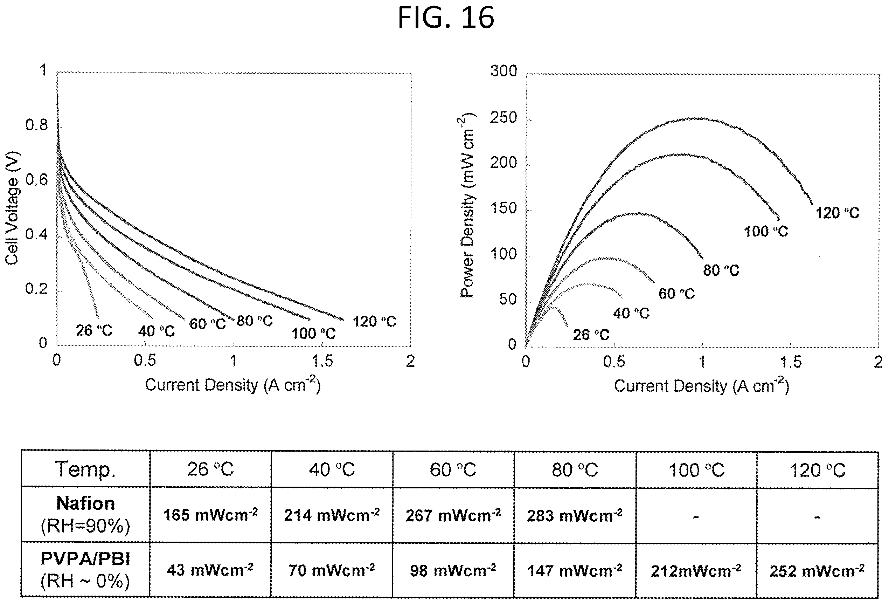

The result of the comparison test is shown in Fig. 16. The graphs on an upper side of Fig. 16 show a temperature characteristic of the cell according to this embodiment, and a Table on a lower side of Fig. 16 shows a comparison between the cell according to this embodiment and the conventional-type cell.

As can be understood also from the respective graphs, it is proved that the cell according to this embodiment can obtain electric power substantially equal to that of the conventional-type cell. Further, although not shown in the drawing, as can be understood from the result obtained in [6. Characteristic of cell], the substantially same result is also obtained with respect to the cell (MWNT/PBI/PVPA/Pt) according to this embodiment from the test carried out by the inventors of the present invention.

Further, the conventional-type cell requires water in a liquid form in generating electric power and hence, it is necessary to operate the conventional-type cell in a temperature range below 100°C at most. On the other hand, with respect to the cell according to this embodiment, when a proton conduction layer is formed by using PVPA, the conduction of protons can be realized without requiring water in a liquid form so that the cell can be operated in a wide temperature range beyond 100°C.

Accordingly, the cooling mechanism for cooling the cell at a temperature where water can be maintained in a liquid state is unnecessary in operating a fuel cell which includes the cell according to this embodiment and hence, it is possible to largely reduce the constitution of the fuel cell.

In the cell according to this embodiment, the proton conduction layer is formed by way of the adhesive layer and hence, there is no possibility that a proton conduction layer-forming polymer which constitutes a proton conduction layer runs off due to moisture produced by generation of electric power.

Accordingly, even when the cell is operated for a long time, it is possible to prevent the generation of a deterioration phenomenon such as lowering of an electromotive force caused by runoff of a proton conduction layer-forming polymer as much as possible.

### [10. Proton conduction layer runoff test 2]

Next, a cell which includes a catalyst layer formed by using MWNT/PBI/Pt/PVPA and a cell which uses MWNT/PBI/Pt as a catalyst layer constituting body, and includes a catalyst layer in which a phosphoric acid is impregnated in place of PVPA as a proton conductive material are prepared. The deterioration of a cell due to runoff of a proton conductive material is examined by carrying out an acceleration test.

That is, a deterioration acceleration test is carried out with respect to a cell which uses MWNT/PBI/Pt/PVPA where PVPA which is formed on a surface of a catalyst layer constituting body as a thin film and constitutes a proton conduction layer is formed (hereinafter referred to as "MWNT/PBI/Pt/PVPA cell") and a cell which uses a phosphoric acid which is not polymerized as a proton conductive material (hereinafter referred to as "MWNT/PBI/Pt:H₃PO₄ cell"). A difference between the above-mentioned cells in deterioration due to runoff of a proton conductive material (proton conduction layer) is checked.

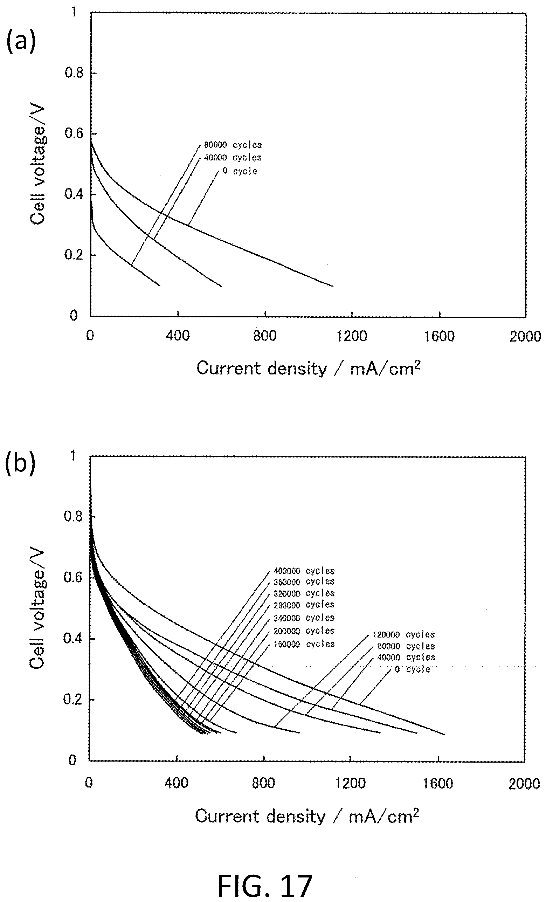

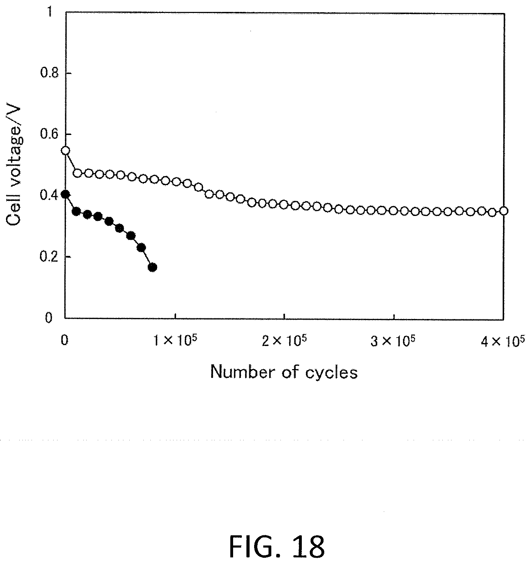

The deterioration acceleration test is carried out in accordance with a durability test set by FCCJ (Fuel Cell Commercialization Conference of Japan) by applying a voltage of 0V at minimum and a voltage of 1.0 to 1.5V at maximum to an oxygen electrode side. A voltage having a triangular wave is applied at a cycle of 2 seconds (0.5Hz) . A result is shown in Fig. 17 and Fig. 18.

Fig. 17 is a graph showing the relationship between a voltage and a current density in each cycle. Fig. 17(a) shows the relationship in an MWNT/PBI/Pt:H₃PO₄ cell, and Fig. 17(b) shows the relationship in an MWNT/PBI/Pt/PVPA cell. As can be understood from the graph shown in Fig. 17(a), in the MWNT/PBI/Pt:H₃PO₄ cell, the lowering of a performance attributed to runoff of a phosphoric acid is confirmed when the number of cycles exceeds 40000 cycles, and outstanding deterioration of a performance is confirmed at 80000 cycles.

On the other hand, in the MWNT/PBI/Pt/PVPA cell shown in Fig. 17(b), outstanding deterioration of a performance is not confirmed even at 40000 cycles, and the lowering of a performance at a level of the lowering of a performance in the MWNT/PBI/Pt:H₃PO₄ cell is not confirmed even at 80000 cycles. Thereafter, the test is carried out up to 400000 cycles with respect to the MWNT/PBI/Pt/PVPA cell, and it is confirmed that the performance of the MWNT/PBI/Pt/PVPA cell is higher than a performance of the MWNT/PBI/Pt:H₃PO₄ cell at 80000 cycles.

Fig. 18 is a graph where voltages at respective number of cycles are plotted with a current density set at 200mA/cm², wherein a voltage is taken on an axis of ordinates and the number of cycles is taken on an axis of abscissas. In the graph, the MWNT/PBI/Pt/PVPA cell is indicated by blanked dots, and the MWNT/PBI/Pt:H₃PO₄ cell is indicated by black dots. It is understood also from Fig. 18 that runoff of a proton conductive material is suppressed in the MWNT/PBI/Pt/PVPA cell compared to the MWNT/PBI/Pt:H₃PO₄ cell.

From these results, it is proved that when MWNT/PBI/Pt/PVPA according to this embodiment is used as a catalyst layer constituting body, runoff of an acid component of a proton conductive material can be suppressed compared to a cell where a material which is not polymerized (phosphoric acid, for example) is used as a proton conductive material. It is also proved that durability is enhanced.

As has been described heretofore, the catalyst layer forming body according to the present invention is directed to a catalyst layer constituting body of a fuel cell where catalyst particles are carried on carbon, wherein the catalyst particles are carried on the carbon by way of a carrying layer constituted of two upper and lower layers, the upper layer of the carrying layer is formed by using a polymer having proton conductivity, the upper layer forming a proton conduction layer which conducts protons generated in the catalyst particles or protons to be supplied to the catalyst particles therethrough, and the lower layer of the carrying layer is formed by using a polymer having affinity with both the proton conduction layer and the carbon, the lower layer forming an adhesive layer which bonds the proton conduction layer and the carbon to each other. Accordingly, it is possible to provide a catalyst layer constituting body which can prevent runoff of a proton conductive polymer from a catalyst layer even when moisture is generated by an operation of a fuel cell.

The scope of protection is defined by the claims.

### Reference Signs List

- 10: carbon
- 12: adhesive layer
- 14: proton conduction layer
- 16: catalyst particles
- 18: carrying layer

## Claims

1. A catalyst layer constituting body (A, B) of a fuel cell (105) where catalyst particles (16) are carried on carbon (10), wherein
the catalyst particles (16) are carried on the carbon (10) by way of a carrying layer (18) constituted of an upper layer and a lower layer,
the upper layer of the carrying layer (18) is formed by using a polymer having proton conductivity, the upper layer forming a proton conduction layer (14) which conducts protons generated in the catalyst particles (16) or protons to be supplied to the catalyst particles (16) therethrough,
the lower layer of the carrying layer (18) is formed by using a polymer having affinity with both the proton conduction layer (14) and the carbon (10), the lower layer forming an adhesive layer (12) which binds the proton conduction layer (14) and the carbon (10) to each other,
the adhesive layer (12) is formed on a surface of the carbon (10),
the proton conduction layer (14) is formed on a surface of the adhesive layer (12), and
the adhesive layer (12) is formed by using a polymer which contains benzene rings and a structure which exhibits basicity in a molecular structure thereof.

2. The catalyst layer constituting body according to claim 1, wherein the catalyst particles (16) are carried between the upper layer and the lower layer of the carrying layer (18) .

3. The catalyst layer constituting body (A, B) according to claim 2, wherein the polymer used to form the adhesive layer (12) comprises atoms having unpaired electrons and contained in a molecular structure thereof.

4. The catalyst layer constituting body (A, B) according to any one of claims 1 to 3, wherein the proton conduction layer (14) is formed by using a polymer having acidic side chains.

5. The catalyst layer constituting body (A, B) according to claim 1 or claim 2, wherein the proton conduction layer (14) is formed by using a polymer having acidic side chains, and the catalyst particles (16) are carried on a surface of the proton conduction layer (14).

6. The catalyst layer constituting body (A, B) according to any one of claims 1 to 5, wherein the carbon (10) is a component selected from a group of components consisting of carbon black, graphene and carbon nanotube and a mixture of said two or more components.

7. The catalyst layer constituting body (A, B) according to any one of claims 1 to 6, wherein the polymer used to form the adhesive layer (12) comprises polybenzimidazole as a main component.

8. The catalyst layer constituting body according to any one of claims 1 to 7, wherein the proton conduction layer (14) is formed by using a polyvinylphosphonic acid as a main component.

9. An electrode provided with a catalyst being **characterized in that** a catalyst layer is formed by stacking the catalyst layer constituting body (A, B) according to any one of claims 1 to 8 on a surface of an electrode sheet.

10. A cell being **characterized in that** the electrode provided with a catalyst according to claim 9 is provided at least as an oxygen-electrode-side electrode.

11. A solid polymer film (100) provided with a catalyst being **characterized in that** the catalyst layer constituting body (A, B) according to any one of claims to 1 to 8 is stacked at least on an oxygen-electrode-side surface of the solid polymer film (100) thus forming a catalyst layer (103).

12. A cell being **characterized in that** the cell includes the solid polymer film (100) provided with a catalyst according to claim 11.

13. A fuel cell (105) provided with the cell according to claim 10 or claim 12.

14. A method of preparing a catalyst layer constituting body (A, B) of a fuel cell (105) where catalyst particles (16) are carried on carbon (10), the method comprising the steps of:
obtaining adhesive-layer-forming polymer deposited carbon where a adhesive-layer-forming polymer is deposited on a surface of the carbon (10) with a large film thickness by preparing a first dispersion medium by dissolving the adhesive-layer-forming polymer in a first solvent which exhibits solubility to the adhesive-layer-forming polymer, the adhesive-layer-forming polymer including benzene rings and a structure which exhibits basicity in a molecular structure thereof, by dispersing the carbon into the first dispersion medium and, thereafter, by collecting a filtered residue after filtering the first dispersion medium;
generating adhesive layer formed carbon where a thin-film-like adhesive layer (12) is formed on a surface of the carbon (10) by removing an extra adhesive-layer-forming polymer deposited on the surface of the carbon (10) by cleaning the adhesive-layer-forming polymer deposited carbon using the first solvent;
generating catalyst-deposited carbon where catalyst particles (16) are deposited on a surface of the adhesive layer (12) by adding catalyst particles (16) or a catalyst raw-material component to a dispersing liquid prepared by dispersing the adhesive layer formed carbon into a second dispersion medium;
obtaining proton conduction layer-forming polymer deposited carbon where a proton conduction layer-forming polymer is deposited on a surface of the catalyst-deposited carbon with a large film thickness by preparing a third dispersion medium by dissolving the proton conduction layer-forming polymer having acidic side chains into a second solvent which exhibits solubility to the proton conduction layer-forming polymer, by dispersing the catalyst-deposited carbon into the third dispersion medium and, thereafter, by collecting a filtered residue after filtering the third dispersion medium: and
obtaining a catalyst layer constituting body (A, B) where a thin-film-like proton conduction layer (14) is formed on a surface of the catalyst-deposited carbon by removing an extra proton conduction layer-forming polymer deposited on the surface of the catalyst-deposited carbon by cleaning the proton conduction layer-forming polymer deposited carbon using the second solvent.

15. The method of preparing a catalyst layer constituting body (A, B) according to claim 14, wherein the adhesive-layer-forming polymer includes atoms having unpaired electrons in a molecular structure thereof.

16. A method of preparing a catalyst layer constituting body (A, B) of a fuel cell (105) where catalyst particles (16) are carried on carbon (10), the method comprising the steps of:
obtaining adhesive-layer-forming polymer deposited carbon where a adhesive-layer-forming polymer is deposited on a surface of the carbon (10) with a large film thickness by preparing a first dispersion medium by dissolving the adhesive-layer-forming polymer which includes benzene rings and a structure which exhibits basicity in a molecular structure in a first solvent which exhibits solubility to the adhesive-layer-forming polymer, by dispersing the carbon (10) into the first dispersion medium and, thereafter, by collecting a filtered residue after filtering the first dispersion medium;
generating adhesive layer formed carbon where a thin-film-like adhesive layer (12) is formed on a surface of the carbon (10) by removing an extra adhesive-layer-forming polymer deposited on the surface of the carbon (10) by cleaning the adhesive-layer-forming polymer deposited carbon using the first solvent;
obtaining proton conduction layer-forming polymer deposited carbon where a proton conduction layer-forming polymer is deposited on a surface of the adhesive layer formed carbon with a large film thickness by preparing a second dispersion medium by dissolving the proton conduction layer-forming polymer having acidic side chains into a second solvent which exhibits solubility to the proton conduction layer-forming polymer, by dispersing the adhesive layer formed carbon into the second dispersion medium and, thereafter, by collecting a filtered residue after filtering the second dispersion medium:
obtaining proton conduction layer formed carbon where a thin-film-like proton conduction layer is formed on a surface of the adhesive layer formed carbon by removing an extra proton conduction layer-forming polymer deposited on a surface of the adhesive layer formed carbon by cleaning the proton conduction layer-forming polymer deposited carbon by the second solvent; and
forming a catalyst layer (103) constituting body (A, B) where catalyst particles (16) are deposited on a surface of the proton conduction layer formed carbon by adding catalyst particles (16) or a catalyst raw-material component to a dispersing liquid prepared by dispersing the proton conduction layer formed carbon in the third dispersion medium.

## Patentansprüche

1. Katalysatorschichtbildender Körper (A, B) einer Brennstoffzelle (105), bei dem Katalysatorpartikel (16) auf Kohlenstoff (10) getragen werden, wobei
die Katalysatorpartikel (16) mittels einer Trägerschicht (18), die aus einer oberen Schicht und einer unteren Schicht besteht, auf dem Kohlenstoff (10) getragen werden,
die obere Schicht der Trägerschicht (18) aus einem protonenleitfähigen Polymer gebildet ist, wobei die obere Schicht eine Protonenleitschicht (14) bildet, die Protonen leitet, die in den Katalysatorpartikeln (16) erzeugt wurden oder Protonen, die dadurch an die Katalysatorpartikel (16) geleitet werden sollen,
die untere Schicht der Trägerschicht (18) aus einem Polymer gebildet ist, das sowohl zur Protonenleitschicht (14) als auch zum Kohlenstoff (10) eine Affinität aufweist, wobei die untere Schicht eine Adhäsivschicht (12) bildet, welche die Protonenleitschicht (14) und den Kohlenstoff (10) miteinander verbindet,
die Adhäsivschicht (12) auf einer Oberfläche des Kohlenstoffs (10) ausgebildet ist,
die Protonenleitschicht (14) auf einer Oberfläche der Adhäsivschicht (12) ausgebildet ist, und
die Adhäsivschicht (12) aus einem Polymer gebildet ist, das Benzenringe enthält und eine Struktur, die in ihrer Molekularstruktur Basizität aufweist.

2. Katalysatorschichtbildender Körper nach Anspruch 1, wobei die Katalysatorpartikel (16) zwischen der oberen Schicht und der unteren Schicht der Trägerschicht (18) getragen werden.

3. Katalysatorschichtbildender Körper (A, B) nach Anspruch 2, wobei das zur Bildung der Adhäsivschicht (12) verwendete Polymer Atome mit ungepaarten Elektronen aufweist, die in einer Molekularstruktur davon enthalten sind.

4. Katalysatorschichtbildender Körper (A, B) nach einem der Ansprüche 1 bis 3, wobei die Protonenleitschicht (14) aus einem Polymer mit sauren Seitenketten gebildet ist.

5. Katalysatorschichtbildender Körper (A, B) nach Anspruch 1 oder 2, wobei die Protonenleitschicht (14) aus einem Polymer mit sauren Seitenketten gebildet ist und die Katalysatorpartikel (16) auf einer Oberfläche der Protonenleitschicht (14) getragen werden.

6. Katalysatorschichtbildender Körper (A, B) nach einem der Ansprüche 1 bis 5, wobei der Kohlenstoff (10) eine Komponente ist, die aus einer Gruppe von Komponenten bestehend aus Ruß, Graphen und Kohlenstoffnanoröhrchen und einer Mischung aus zwei oder mehreren der genannten Komponenten ausgewählt ist.

7. Katalysatorschichtbildender Körper (A, B) nach einem der Ansprüche 1 bis 6, wobei das zur Bildung der Adhäsionsschicht (12) verwendete Polymer Polybenzimidazol als Hauptkomponente aufweist.

8. Katalysatorschichtbildender Körper nach einem der Ansprüche 1 bis 7, wobei die Protonenleitschicht (14) aus einer Polyvinylphosphonsäure als eine Hauptkomponente gebildet ist.

9. Elektrode, die mit einem Katalysator vorgesehen ist, **dadurch gekennzeichnet, dass** eine Katalysatorschicht gebildet wird, indem der katalysatorschichtbildende Körper (A, B) nach einem der Ansprüche 1 bis 8 auf einer Oberfläche einer Elektrodenplatte geschichtet wird.

10. Zelle, die **dadurch gekennzeichnet ist, dass** die mit einem Katalysator vorgesehen Elektrode nach Anspruch 9 zumindest als eine sauerstoffelektrodenseitige Elektrode vorgesehen ist.

11. Mit einem Katalysator vorgesehener fester Polymerfilm (100), **dadurch gekennzeichnet, dass** der katalysatorschichtbildende Körper (A, B) nach einem der Ansprüche 1 bis 8 zumindest auf einer sauerstoffelektrodenseitigen Oberfläche des festen Polymerfilms (100) geschichtet ist und somit eine Katalysatorschicht (103) bildet.

12. Zelle, die **dadurch gekennzeichnet ist, dass** die Zelle den mit einem Katalysator nach Anspruch 11 vorgesehenen festen Polymerfilm (100) aufweist.

13. Brennstoffzelle (105), die mit der Zelle nach Anspruch 10 oder Anspruch 12 vorgesehen ist.

14. Verfahren zur Herstellung eines katalysatorschichtbildenden Körpers (A, B) einer Brennstoffzelle (105), bei dem Katalysatorpartikel (16) auf Kohlenstoff (10) getragen werden, wobei das Verfahren folgende Schritte umfasst:
Erhalten von mit adhäsionsschichtbildendem Polymer beschichtetem Kohlenstoff, bei dem sich ein adhäsionsschichtbildendes Polymer auf einer Oberfläche des Kohlenstoffs (10) mit einer großen Filmdicke ablagert, durch Herstellen eines ersten Dispersionsmediums, indem das adhäsionsschichtbildende Polymer in einem ersten Lösungsmittel gelöst wird, das Löslichkeit
gegenüber dem adhäsionsschichtbildenden Polymer aufweist, wobei das adhäsionsschichtbildende Polymer Benzenringe aufweist und eine Struktur, die in ihrer Molekularstruktur Basizität aufweist, durch Dispergieren des Kohlenstoffs in dem ersten Dispersionsmedium und anschließend durch Sammeln eines gefilterten Rückstands nach Filtern des ersten Dispersionsmediums;
Erzeugen von adhäsionsschichtgebildetem Kohlenstoff, bei dem eine dünnfilmartige Adhäsionsschicht (12) auf einer Oberfläche des Kohlenstoffs (10) gebildet wird, durch Entfernen eines zusätzlichen adhäsionsschichtbildenden Polymers, das auf der Oberfläche des Kohlenstoffs (10) abgelagert ist, durch Reinigen des mit adhäsionsschichtbildendem Polymer beschichteten Kohlenstoffs mittels des ersten Lösungsmittels;
Erzeugen eines katalysatorbeschichteten Kohlenstoffs, bei dem sich Katalysatorpartikel (16) auf einer Oberfläche der Adhäsionsschicht (12) ablagern, durch Hinzufügen von Katalysatorpartikeln (16) oder einer Katalysator-Rohstoffkomponente zu einer Dispersionsflüssigkeit, die durch Dispergieren des adhäsionsschichtgebildeten Kohlenstoffs in ein zweites Dispersionsmedium hergestellt wird;
Erhalten von mit protonenleitschichtbildendem Polymer beschichtetem Kohlenstoff, bei dem sich ein protonenleitschichtbildendes Polymer auf einer Oberfläche des katalysatorbeschichteten Kohlenstoffs mit einer großen Filmdicke ablagert, durch Herstellen eines dritten Dispersionsmediums, indem das protonenleitschichtbildenden Polymers mit saure Seitenketten in einem zweiten Lösungsmittel, das Löslichkeit gegenüber dem protonenleitschichtbildendem Polymer aufweist, aufgelöst wird durch Dispergieren des katalysatorbeschichteten Kohlenstoffs in dem dritten Dispersionsmedium und anschließend durch Sammeln eines gefilterten Rückstands nach dem Filtern des dritten Dispersionsmediums; und
Erhalten eines katalysatorschichtbildenden Körpers (A, B), bei dem eine dünnfilmartige Protonenleitschicht (14) auf einer Oberfläche des katalysatorbeschichteten Kohlenstoffs gebildet wird, durch Entfernen eines zusätzlichen protonenleitschichtbildenden Polymers, das auf der Oberfläche des katalysatorbeschichteten Kohlenstoffs abgelagert ist, durch Reinigen des mit protonenleitschichtbildendem Polymer beschichteten Kohlenstoffs mittels des zweiten Lösungsmittels.

15. Verfahren zur Herstellung eines katalysatorschichtbildenden Körpers (A, B) nach Anspruch 14, wobei das adhäsionsschichtbildende Polymer Atome mit ungepaarten Elektronen in einer Molekularstruktur davon aufweist.

16. Verfahren zur Herstellung eines katalysatorschichtbildenden Körpers (A, B) einer Brennstoffzelle (105), bei dem Katalysatorpartikel (16) auf Kohlenstoff getragen werden, wobei das Verfahren folgende Schritte umfasst:
Erhalten von mit adhäsionsschichtbildendem Polymer beschichtetem Kohlenstoff, bei dem sich ein adhäsionsschichtbildendes Polymer auf einer Oberfläche des Kohlenstoffs (10) mit einer großen Filmdicke ablagert, durch Herstellen eines ersten Dispersionsmediums, indem das adhäsionsschichtbildende Polymer, das Benzenringe aufweist und eine Struktur, die in ihrer Molekularstruktur Basizität aufweist, in einem ersten Lösungsmittel gelöst wird, das Löslichkeit gegenüber dem adhäsionsschichtbildendem Polymer aufweist, durch Dispergieren des Kohlenstoffs (10) in dem ersten Dispersionsmedium und anschließend durch Sammeln eines gefilterten Rückstands nach Filtern des ersten Dispersionsmediums;
Erzeugen von adhäsionsschichtgebildetem Kohlenstoff, bei dem eine dünnfilmartige Adhäsionsschicht (12) auf einer Oberfläche des Kohlenstoffs (10) gebildet wird, durch Entfernen eines zusätzlichen adhäsionsschichtbildenden Polymers, das auf der Oberfläche des Kohlenstoffs (10) abgelagert ist, durch Reinigen des mit adhäsionsschichtbildendem Polymer beschichteten Kohlenstoffs mittels des ersten Lösungsmittels;
Erhalten von mit protonenleitschichtbildendem Polymer beschichtetem Kohlenstoff, bei dem sich ein protonenleitschichtbildendes Polymer auf einer Oberfläche des adhäsionsschichtgebildeten Kohlenstoffs mit einer großen Filmdicke ablagert, durch Herstellen eines zweiten Dispersionsmediums, indem das protonenleitschichtbildenden Polymers mit sauren Seitenketten in einem zweiten Lösungsmittel, das Löslichkeit gegenüber dem protonenleitschichtbildenden Polymer aufweist, aufgelöst wird durch Dispergieren des adhäsionsschichtgebildeten Kohlenstoffs in dem zweiten Dispersionsmedium und anschließend durch Sammeln eines gefilterten Rückstands nach dem Filtern des zweiten Dispersionsmediums; und
Erhalten von protonenleitschichtgebildetem Kohlenstoff, bei dem eine dünnfilmartige Protonenleitschicht auf einer Oberfläche des adhäsionsschichtgebildetem Kohlenstoffs gebildet wird, durch Entfernen eines zusätzlichen protonenleitschichtbildenden Polymers, das auf der Oberfläche des adhäsionsschichtgebildeten Kohlenstoffs abgelagert ist, durch Reinigen des mit einem protonenleitschichtbildendem Polymer beschichteten Kohlenstoffs mittels des zweiten Lösungsmittels; und
Bilden eines katalysatorschichtbildenden (103) Körpers (A, B), bei dem Katalysatorpartikel (16) auf einer Oberfläche des protonenleitschichtgebildeten Kohlenstoffs abgelagert sind, durch Hinzufüge von Katalysatorpartikeln (16) oder einer Katalysator-Rohstoffkomponente zu einer Dispersionsflüssigkeit, die durch Dispergieren des protonenleitschichtbildenden Kohlenstoffs in dem dritte Dispersionsmedium hergestellt wird.

## Revendications

1. Corps constitutif de couche de catalyseur (A, B) d'une pile à combustible (105) dans lequel les particules de catalyseur (16) sont portées par du carbone (10), dans lequel
les particules de catalyseur (16) sont portées par le carbone (10) au moyen d'une couche porteuse (18) constituée d'une couche supérieure et d'une couche inférieure,
la couche supérieure de la couche porteuse (18) est formée en utilisant un polymère ayant une conductivité protonique, la couche supérieure formant une couche de conduction de proton (14) qui conduit les protons générés dans les particules de catalyseur (16) ou les protons qui doivent être fournis aux particules de catalyseur (16) par son intermédiaire,
la couche inférieure de la couche porteuse (18) est formée en utilisant un polymère ayant une affinité à la fois avec la couche de conduction de proton (14) et le carbone (10), la couche inférieure formant une couche adhésive (12) qui lie la couche de conduction de proton (14) et le carbone (10) ensemble,
la couche adhésive (12) est formée sur une surface du carbone (10),
la couche de conduction de proton (14) est formée sur une surface de la couche adhésive (12), et
la couche adhésive (12) est formée en utilisant un polymère qui contient des anneaux benzéniques et une structure qui montre une basicité dans une structure moléculaire de celle-ci.

2. Corps constitutif de couche de catalyseur selon la revendication 1, dans lequel les particules de catalyseur (16) sont portées entre la couche supérieure et la couche inférieure de la couche porteuse (18).

3. Corps constitutif de couche de catalyseur (A, B) selon la revendication 2, dans lequel le polymère utilisé pour former la couche adhésive (12) comprend des atomes ayant des électrons non appariés et contenus dans une structure moléculaire de celle-ci.

4. Corps constitutif de couche de catalyseur (A, B) selon l'une quelconque des revendications 1 à 3, dans lequel la couche de conduction de proton (14) est formée en utilisant un polymère ayant des chaines latérales acides.

5. Corps constitutif de couche de catalyseur (A, B) selon la revendication 1 ou la revendication 2, dans lequel la couche de conduction de proton (14) est formée en utilisant un polymère ayant des chaines latérales acides, et les particules de catalyseur (16) sont portées par une surface de la couche de conduction de proton (14).

6. Corps constitutif de couche de catalyseur (A, B) selon l'une quelconque des revendications 1 à 5, dans lequel le carbone (10) est un composant choisi dans un groupe de composants consistant en le noir de carbone, le graphène et le nanotube de carbone et un mélange desdits deux ou plus composants.

7. Corps constitutif de couche de catalyseur (A, B) selon l'une quelconque des revendications 1 à 6, dans lequel le polymère utilisé pour former la couche adhésive (12) comprend du polybenzimidazole comme composant principal.

8. Corps constitutif de couche de catalyseur selon l'une quelconque des revendications 1 à 7, dans lequel la couche de conduction de proton (14) est formée en utilisant un acide polyvinylphosphonique comme composant principal.

9. Electrode dotée d'un catalyseur, **caractérisée en ce qu'**une couche de catalyseur est formée en empilant le corps constitutif de couche de catalyseur (A, B) selon l'une quelconque des revendications 1 à 8 sur une surface d'une feuille d'électrode.

10. Cellule **caractérisée en ce que** l'électrode dotée d'un catalyseur selon la revendication 9 est réalisée au moins sous la forme d'une électrode du côté de l'électrode oxygène.

11. Film de polymère solide (100) doté d'un catalyseur, **caractérisé en ce que** le corps constitutif de couche de catalyseur (A, B) selon l'une quelconque des revendications 1 à 8, est empilé au moins sur une surface du côté de l'électrode oxygène du film de polymère solide (100) en formant ainsi une couche de catalyseur (103).

12. Cellule **caractérisée en ce que** la cellule inclut le film de polymère solide (100) doté d'un catalyseur selon la revendication 11.

13. Pile à combustible (105) dotée de la cellule selon la revendication 10 ou la revendication 12.

14. Procédé de préparation d'un corps constitutif de couche de catalyseur (A, B) d'une pile à combustible (105) dans laquelle les particules de catalyseur (16) sont portées par du carbone (10), le procédé comprenant les étapes suivantes :
l'obtention d'un carbone sur lequel est déposé un polymère formant une couche adhésive, où un polymère formant une couche adhésive est déposé sur une surface du carbone (10) ayant une épaisseur de film importante en préparant un premier milieu de dispersion en dissolvant le polymère formant une couche adhésive dans un premier solvant qui montre une solubilité pour ledit polymère formant une couche adhésive, ledit polymère formant une couche adhésive comportant des anneaux benzéniques et une structure qui montre une basicité dans une structure moléculaire de celle-ci, en dispersant le carbone dans le premier milieu de dispersion et, ensuite, en récupérant un résidu filtré après filtration du premier milieu de dispersion ;
la génération d'un carbone sur lequel est formée une couche adhésive où une couche adhésive semblable à un film mince (12) est formée sur une surface du carbone (10) en enlevant un polymère formant une couche adhésive en excès déposé sur la surface du carbone (10) en nettoyant le carbone sur lequel est déposé un polymère formant une couche adhésive en utilisant le premier solvant ;
la génération d'un carbone sur lequel est déposé un catalyseur où les particules de catalyseur (16) sont déposées sur une surface de la couche adhésive (12) en ajoutant des particules de catalyseur (16) ou un composant de matière première de catalyseur à un liquide dispersant préparé en dispersant le carbone sur lequel est formée une couche adhésive dans un deuxième milieu de dispersion ;
l'obtention d'un carbone sur lequel est déposé un polymère formant une couche de conduction de proton où un polymère formant une couche de conduction de proton est déposé sur une surface du carbone sur laquelle est déposé un catalyseur avec une épaisseur de film importante en préparant un troisième milieu de dispersion en dissolvant le polymère formant une couche de conduction de proton ayant des chaines latérales acides dans un deuxième solvant qui montre une solubilité pour le polymère formant une couche de conduction de proton, en dispersant le carbone sur lequel est déposé un catalyseur dans le troisième milieu de dispersion et, ensuite, en récupérant un résidu filtré après filtration du troisième milieu de dispersion ; et
l'obtention d'un corps constitutif de couche de catalyseur (A, B) où une couche de conduction de proton (14) semblable à un film mince est formée sur une surface du carbone sur laquelle est déposé un catalyseur en enlevant un polymère formant une couche de conduction de proton en excès déposé sur la surface du carbone sur laquelle est déposé un catalyseur en nettoyant le carbone sur lequel est déposé le polymère formant une couche de conduction de proton en utilisant le deuxième solvant.

15. Procédé de préparation d'un corps constitutif de couche de catalyseur (A, B) selon la revendication 14, dans lequel le polymère formant une couche adhésive inclut des atomes ayant des électrons non appariés dans une structure moléculaire de celui-ci.

16. Procédé de préparation d'un corps constitutif de couche de catalyseur (A, B) d'une pile à combustible (105) dans lequel les particules de catalyseur (16) sont portées par du carbone (10), ledit procédé comprenant les étapes suivantes :
l'obtention d'un carbone sur lequel est déposé un polymère formant une couche adhésive, où un polymère formant une couche adhésive est déposé sur une surface du carbone (10) ayant une épaisseur de film importante en préparant un premier milieu de dispersion en dissolvant le polymère formant une couche adhésive qui inclut des anneaux benzéniques et une structure qui montre une solubilité dans le polymère formant une couche adhésive, en dispersant le carbone (10) dans le premier milieu de dispersion et, ensuite, en récupérant un résidu filtré après filtration du premier milieu de dispersion ;
la génération d'un carbone sur lequel est formée une couche adhésive où une couche adhésive semblable à un film mince (12) est formée sur une surface du carbone (10) en enlevant un polymère formant une couche adhésive en excès déposé sur la surface du carbone (10) en nettoyant le carbone sur lequel est déposé un polymère formant une couche adhésive en utilisant le premier solvant ;
l'obtention d'un carbone sur lequel est déposé un polymère formant une couche de conduction de proton où un polymère formant une couche de conduction de proton est déposé sur une surface du carbone sur laquelle est formée une couche adhésive avec une épaisseur de film importante en préparant un deuxième milieu de dispersion en dissolvant le polymère formant une couche de conduction de proton ayant des chaines latérales acides dans un deuxième solvant qui montre une solubilité pour le polymère formant une couche de conduction de proton, en dispersant le carbone sur lequel est formée la couche adhésive dans le deuxième milieu de dispersion et, ensuite, en récupérant un résidu filtré après filtration du deuxième milieu de dispersion ;
l'obtention d'un carbone sur lequel est déposé une couche de conduction de proton où une couche de conduction de proton semblable à un film mince est formée sur une surface du carbone sur laquelle est déposée une couche adhésive en enlevant un polymère formant une couche de conduction de proton en excès déposé sur une surface du carbone sur laquelle est déposée une couche adhésive en nettoyant le carbone sur lequel est déposé le polymère formant une couche de conduction de proton en utilisant le deuxième solvant ; et
la formation d'un corps constitutif de couche de catalyseur (103) (A, B) où des particules de catalyseur (16) sont déposées sur une surface du carbone sur laquelle est déposée une couche de conduction de proton en ajoutant des particules de catalyseur (16) ou un composant de matière première de catalyseur à un liquide dispersant préparé en dispersant le carbone sur lequel est déposée la couche de conduction de proton dans le troisième milieu de dispersion.
